# EUROPEAN PATENT APPLICATION

(11) **EP 2 072 597 A1**
(43) Date of publication of application: **24.06.2009**
(21) Application number: 08171815.7
(22) Date of filing: 16.12.2008
(51) Int. Cl.: C09J 7/02, C09J 11/08, C09J 11/06

(54) **Heat-Sensitive Adhesive and Heat-Sensitive Adhesive Material**

(30) Priority: 17.12.2007 JP 2007325068; 04.08.2008 JP 2008200898
(71) Applicant: Ricoh Company, Ltd., Tokyo 143-8555 (JP)
(72) Inventor: Yamaguchi, Takehito Ricoh Company, Ltd., Tokyo 143-8555 (JP); Shimbo, Hitoshi Ricoh Company, Ltd., Tokyo 143-8555 (JP); Kuga, Yutaka Ricoh Company, Ltd., Tokyo 143-8555 (JP)
(74) Representative: Barz, Peter

(57) **Abstract**

The present invention provides a heat-sensitive adhesive containing at least a thermoplastic resin, a solid plasticizer, and an adhesion-imparting agent, wherein the adhesion-imparting agent is an adhesion-imparting agent emulsion which is prepared by emulsifying in the presence of a polymeric emulsifier.

## Description

### BACKGROUND OF THE INVENTION

### Field of the Invention

The present invention relates to a water-dispersible heat-sensitive adhesive and a heat-sensitive adhesive material that do not have adhesiveness at normal temperature but exhibit adhesiveness by being heated and can sustain the adhesiveness after the adhesive being exhibited expressed, and have superior adhesion force to especially to rough-surfaced adherends such as corrugated cardboard.

### Description of the Related Art

Conventionally, with respect to heat-sensitive adhesives, water-dispersible adhesives, as typified by delayed tack pressure-sensitive adhesives known in the art, have been often used in order to maintain their adhesiveness after exertion of adhesiveness. For instance, as described in Secchaku Binran "Adhesive Handbook", 12th Edition, Kobunshi Kankokai (1980) on pp. 131 to 135, heat-sensitive adhesives have a basic composition of thermoplastic resin(s), adhesion-imparting agent(s) and solid plasticizer(s). Thermoplastic resins are an essential component to exhibit adhesion force and adhesive strength. Solid plasticizers are solid at normal temperature and thus do not impart plasticity to resins, but melted by being heated to swell or soften resins, in other words, they exert their action of causing adhesives not having adhesiveness at normal temperature to exhibit the adhesiveness by heat application. On that occasion, when an adhesion-imparting agent is blended together with the thermoplastic resin and solid plasticizer, the adhesiveness is further exerted, thereby improving its practicality. Such heat-sensitive adhesives are commonly applied onto paper such as coat paper, art paper and deposited paper, or onto plastic bases such as PET film and then used after attached onto adherends such as metal, glass, or plastic.

Japanese Patent Application Laid-Open (JP-A) Nos. 2003-206455 and 2002-38123 respectively propose a delayed tack adhesives using benzophenone as a solid plasticizer. These proposed adhesives exert their adhesiveness to polyolefine, and mirror surfaces such as glass, but are poor in adhesiveness to rough-surfaced adherends such as corrugated cardboard, and thus after being affixed to corrugated cardboard, a reduction in adhesive strength takes place with a lapse of time, leading to troubles in practical use in physical distribution such as overnight-delivery service.

Japanese Patent Application Laid-Open (JP-A) No. 2002-105414 proposes a heat-sensitive adhesive material which contains a hindered phenol compound, a benzotriazole compound and an aromatic sulfonamide compound and further contains hollow particles having a hollow rate of 50% in an under layer. However, even when the proposed heat-sensitive adhesive is used, they leave much to be desired in terms of adhesiveness to rough-surfaced adherends such as corrugated cardboard, and blocking resistance.

Also, Japanese Patent (JP-B) No. 3556414 proposes a delayed tack glue containing benzotriazole as a solid plasticizer, which can maintain a stable adhesion force for long period of time to adherends, including materials such as paper, glass and metals, and polyolefine resins such as polypropylene and polyethylene. The delayed tack glue, however, is yet insufficient in adhesion force to rough-surfaced adherends such as corrugated cardboard.

Delayed tack glues excellent in adhesiveness to corrugated cardboard, each of which uses a phosphorus compound as a solid plasticizer, are proposed (see Japanese Patent Application Laid-Open (JP-A) Nos. 2006-257163, 2006-257320, and 2007-77288). Also, a heat-sensitive adhesive material is proposed which has an adhesive under layer, a hollow intermediate layer and a heat-sensitive adhesive layer on or above a support (see Japanese Patent Application Laid-Open (JP-A) No. 2006-83196). However, when an attempt is made to increase the adhesiveness of the heat-sensitive adhesive material to corrugated cardboards under low-temperature environment, blocking occurs during storage at 60°C, and when an attempt to improve the blocking resistance during storage at 60°C is made, the adhesiveness to corrugated cardboard inconveniently degrades under low-temperature environment.

Blocking is a phenomenon in which heat-sensitive adhesive samples exhibit their adhesiveness during storage, and the phenomenon may be induced when samples are exposed under atmospheric temperature higher than normal temperature. When a sample is rolled or is cut into plural pieces and then stacked on one another, blocking occurs. Once blocking is induced, a heat-sensitive adhesive layer sticks to the outer surface of the sample, in other words, the heat-sensitive adhesive layer adheres to the opposite surface of the sample via a support, not only leading to a trouble in paper-feeding but also adversely affecting the printing on the outer surface.

As methods for preventing the occurrence of such blocking, the following methods are proposed: a method of adding a blocking preventive agent and a wax with lubricity in a heat-sensitive adhesive (see Japanese Patent Application Publication (JP-B) No. 62-21835); methods of preventing the occurrence of blocking by protecting a surface of a solid plasticizer with an inorganic compound and colloidal particles so as to prevent the solid plasticizer from softening (see Japanese Patent Application Laid-Open (JP-A) Nos. 6-57223, 6-100847, and 6-100848). However, in these proposals, for instance, the heat-sensitive adhesive according to JP-B No. 62-21835, in which a blocking preventive agent is blended with a wax, is insufficient in blocking preventive effect and contrarily, causes a reduction in its adhesiveness or adhesive property. Further, when a surface of a solid plasticizer is protected with an inorganic compound and colloidal particles, it takes long time in fusing or diffusing of the solid plasticizer, and thus the adhesiveness of the heat-sensitive adhesive is least likely to take place, thereby causing a reduction in adhesiveness, which leads to insufficient practicality.

Japanese Patent Application Laid-Open (JP-A) No. 2000-96021 proposes to use a petroleum-based resin having a softening point of 110°C to less than 150°C as an adhesion-imparting agent. This proposal is insufficient in blocking resistance during storage at 60°C, and the adhesion force to rough-surfaced adherends like corrugated cardboard is still insufficient as well.

Further, methods of producing an adhesion-imparting agent emulsion which is prepared by emulsifying in the presence of a polymeric emulsifier are disclosed in Japanese Patent (JP-B) No. 3350910 and Japanese Patent Application Laid-Open (JP-A) Nos. 2005-200440 and 2007-2106 etc., however, these proposals are intended to enhance the stability of the adhesion-imparting agent emulsion, and the effects and object thereof are different from those of the technique provided by the present invention, which enables improvement of the adhesion force and blocking resistance of a heat-sensitive adhesive containing a solid plasticizer.

Accordingly, a heat-sensitive adhesive and a heat-sensitive adhesive material that are capable of maintaining its adhesion force to rough-surfaced adherends such as corrugated cardboard for a long period of time even under low-temperature environment and are also superior in blocking resistance have not yet been provided so far, and it has been desired to promptly provide such a hest-sensitive adhesive and such a heat-sensitive adhesive material.

### BRIEF SUMMARY OF THE INVENITON

An object of the present invention is to provide a water-dispersible heat-sensitive adhesive and a heat-sensitive adhesive material that are capable of maintaining its adhesion force to rough-surfaced adherends such as corrugated cardboard for a long period of time even under low-temperature environment and are also superior in blocking resistance.

Means to solve the afore-mentioned problems are as follows.
<1> A heat-sensitive adhesive containing at least:
   a thermoplastic resin, a solid plasticizer, and an
   adhesion-imparting agent, wherein the adhesion-imparting agent is an adhesion-imparting agent emulsion which is prepared by emulsifying in the presence of a polymeric emulsifier.
<2> The heat-sensitive adhesive according to < 1 >, wherein the adhesion-imparting agent emulsion contains one of a polymerized rosin and a terpene phenol resin.
<3> The heat-sensitive adhesive according to < 2 >, wherein the terpene phenol resin in the adhesion-imparting agent emulsion has a softening point of 150°C or higher.
<4> The heat-sensitive adhesive according to any one of < 1 > to < 3 >, wherein the polymeric emulsifier has a mass average molecular weight of 5,000 to 40,000.
<5> The heat-sensitive adhesive according to any one of < 1 > to < 4 >, wherein the solid plasticizer is a compound represented by at least any one of formulae (1) to (3) below, 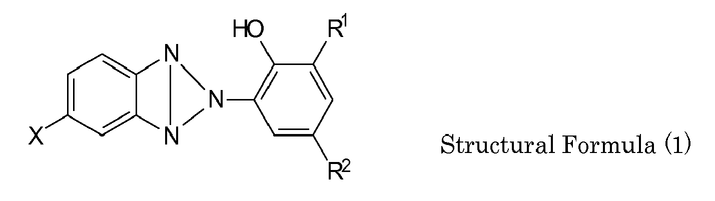 where R¹ and R² may be identical to each other or different from each other, and each represents any one of a hydrogen atom, an alkyl group and an α, α-dimethylbenzyl group; and X represents one of a hydrogen atom and a halogen atom. 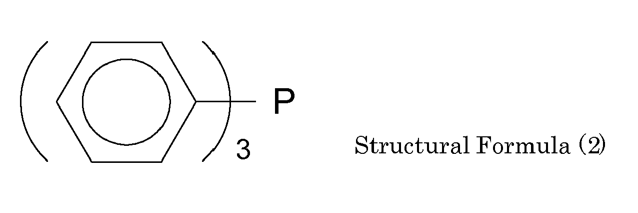 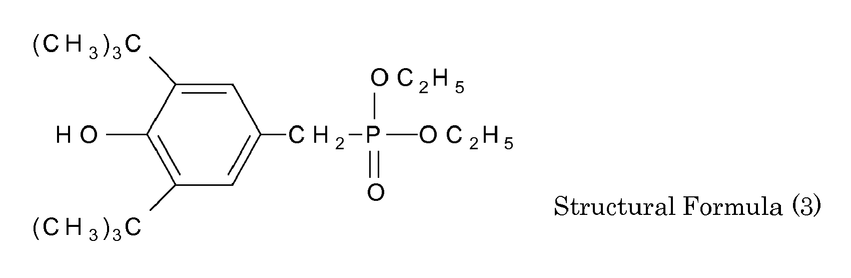
<6> The heat-sensitive adhesive according to any one of < 1 > to < 5 >, wherein the thermoplastic resin is a (meth)acrylic resin having a glass transition temperature (Tg) of -70°C to -30°C.
<7> A heat-sensitive adhesive material having:
   a support, and
   the heat-sensitive adhesive layer according to any one of < 1 > to < 6 >, provided on the support.
<8> The heat-sensitive adhesive material according to < 7 >, further having an under layer between the heat-sensitive adhesive layer and the support.
<9> The heat-sensitive adhesive material according to < 8 >, wherein the under layer is a hollow under layer containing hollow particles.
<10> The heat-sensitive adhesive material according to < 8 >, wherein the under layer is formed of an adhesive under layer and a hollow under layer containing hollow particles.
<11> The heat-sensitive adhesive material according to any one of < 7 > to < 10 >, exhibiting adhesiveness by being heated through a line-type thermal head.
<12> The heat-sensitive adhesive material according to any one of < 7 > to < 11 >, further having a recording layer on a surface of the support opposite to a surface on which the heat-sensitive adhesive layer is provided.

The heat-sensitive adhesive of the present invention contains at least a thermoplastic resin, a solid plasticizer and an adhesion-imparting agent, wherein the adhesion-imparting agent is an adhesion-imparting agent emulsion which is prepared by emulsifying in the presence of a polymeric emulsifier. With this composition, it is possible to obtain a water-dispersible heat-sensitive adhesive which is capable of maintaining its adhesion force to rough-surfaced adherends such as corrugated cardboard for a long period of time even under low-temperature environment and is superior in blocking resistance.

The present invention can solve the conventional problems and can provide a water-dispersible heat-sensitive adhesive and a heat-sensitive adhesive material which are capable of maintaining their adhesion force to rough-surfaced adherends such as corrugated cardboard for a long period of time even under low-temperature environment and are superior in blocking resistance.

### DETAILED DESCRIPTION OF THE INVENTION

### (Heat-sensitive Adhesive)

A heat-sensitive adhesive of the present invention contains a thermoplastic resin, a solid plasticizer and an adhesion-imparting agent, and further contains other components in accordance with the necessity.

### - Adhesion-imparting agent -

The adhesion-imparting agent is an adhesion-imparting agent emulsion which is prepared by emulsifying in the presence of a polymeric emulsifier (hereinafter, may be referred to as "emulsion-type adhesion-imparting agent).

The adhesion-imparting agent is not particularly limited and selected among from various adhesion-imparting agents known in the art. Examples thereof include rosins, rosin derivatives, petroleum-based resins, and terpene-based resins. These may be used alone or in combination.

Examples of the rosins include rosin materials such as gum rosins, wood rosins, and tall oil rosins; stabilized rosins prepared by subjecting these rosin materials to a disproportionation reaction and/or a hydrogenation reaction; and polymerized rosins.

Examples of the rosin derivatives include rosin esters, and rosin phenols.

As the rosin esters, the following are exemplified: (1) rosin esters obtained by subjecting the rosins and polyhydric alcohol to an esterification reaction; (2) polyhydric alcohol esters of rosin that is partly reacted with maleate or fumarate, the rosin is obtained by partly reacting rosin material with maleic acid or fumaric acid and then subjecting to esterification reaction; and (3) polyhydric alcohol esters of rosin that is partly reacted with maleate or fumarate, the rosin is obtained by partly reacting rosin material with maleic acid or fumaric acid, disproportionating the rosin reactant, and then subjecting to esterification reaction. The rosin phenols are those obtained by subjecting rosins to addition reaction with phenols, followed by heat polymerization or further optionally subjecting to esterification.

The polyhydric alcohol used in the esterification is not particularly limited and may be suitably selected in accordance with the intended use. Examples thereof include diethylene glycol, glycerin, trimethylolpropane, trimethylolethane, 1,2,6-hexanetriol, 1,2, 4-butanetriol, and pentaerythritol.

Examples of the petroleum-based resin include C5 petroleum resins, C9 petroleum resins, C5 to C9 copolymerized petroleum resins, coumarone resins, coumarone-indene resins, pure monomer resins, dicyclopentadiene petroleum resins or hydrides thereof.

Examples of the terpene resins include aromatic modified terpene resins in which terpene, such as α-pinene resin, β-pinene resin, and α-pinene, β-pinene, is copolymerized with an aromatic monomer such as styrene, or hydrides thereof.

Among them, polymerized rosins or terpene phenol resins are particularly preferable from the viewpoint of their adhesiveness to corrugated cardboard.

The softening point of a resin contained in the adhesion-imparting agent emulsion is preferably 150°C or higher, and more preferably 150°C to 200°C, from the viewpoint of blocking resistance.

In the present invention, the adhesion-imparting agent is used as an emulsion which is prepared by emulsifying in the presence of a polymeric emulsifier.

As the polymeric emulsifier, a polymer resin is used, and the polymer resin preferably has a mass average molecular weight of 5,000 to 40,000. When the mass average molecular weight is less than 5,000, the blocking resistance of the resultant heat-sensitive adhesive may degrade, and when more than 40,000, the adhesive force thereof under low-temperature condition may degrade.

The mass average molecular weight of the polymer resin can be measured, for example, by gel permeation chromatography (GPC).

The polymeric emulsifier is not particularly limited and may be suitably selected from known polymeric emulsifiers. For instance, the following are exemplified: reactive emulsifiers, polymeric emulsifier an anionic monomer of styrene and/or (meth)acrylic acid alkyl ester (Japanese Patent (JP-B) No. 3350910), a polymeric emulsifier which consists of a copolymer of an anionic monomer with (meth)acrylic acid alkyl ester (JP-A No. 2005-200440), styrenes, (meth)acrylic acid alkyl ester, and polymer salt obtained by copolymerization of an anionic monomer (JP-A No. 2007-2106).

The use amount of the polymeric emulsifier is not particularly limited and may be suitably adjusted in accordance with the intended use, however, it is preferably 1 part by mass to 10 parts by mass, on the solid content basis, per 100 parts by mass of the adhesion-imparting agent, and more preferably 2 parts by mass to 7 parts by mass. When the use amount is more than 10 parts by mass, the resultant adhesive force may be reduced, and when it is less than 1 part by mass, the storage stability of the resultant emulsion-type adhesion-imparting agent may degrade.

The emulsification method is not particularly limited, and a known method, such as high-pressure emulsification method, inversion emulsification method, can be employed. Specifically, the following emulsification methods are exemplified: (1) a method in which the adhesion-imparting agent is dissolved in a solvent such as benzene and toluene to prepare a solution, a polymeric emulsifier and soft water are added to the solution, and the resultant solution is emulsified using a high-pressure emulsifying machine, followed by removal of the solvent under reduced pressure; (2) a method in which a small amount of a solvent such as benzene and toluene is mixed with the adhesion-imparting agent to prepare a mixture, an emulsifier is kneaded into the mixture, further, hot water is gradually added to the resultant mixture to perform phase emulsification and emulsification so as to obtain an emulsion for use as is, or followed by removal of the solvent under reduced pressure, and (3) a method in which an emulsifier is kneaded into the adhesion-imparting agent while increasing the temperature of the adhesion-imparting agent to a temperature equal to or higher than the softening point of the resin used under pressurization or normal pressure, and hot water is gradually added to the resultant mixture to perform phase inversion and emulsification so as to obtain an emulsion.

The solid content concentration of the emulsion-type adhesion-imparting agent is not particularly limited and may be suitably selected in accordance with the intended use. It is preferably 20% by mass to 70% by mass, and more preferably 40% by mass to 60% by mass. The emulsion-type adhesion-imparting agent preferably has an average particle diameter of 0.2 µm to 2 µm, and most of particles thereof are uniformly dispersed therein as particles having diameters of 0.5 µm or less. Also, the emulsion-type adhesion-imparting agent is white and/or milky white in color and has a pH value of about 2 to 9.

The amount of the adhesion-imparting agent contained in the heat-sensitive adhesive is preferably 1% by mass to 30% by mass, on the solid content basis, and more preferably 1% by mass to 20% by mass. When the amount is less than 1% by mass, the resultant adhesive force may be significantly reduced, and when it is more than 30% by mass, a trouble may occur during storage under normal ambient temperature, such as a reduction in blocking resistance, and /or a reduction in initial adhesive force under low-temperature environment.

The emulsion-type adhesion-imparting agent of the present invention is mixed with a thermoplastic resin serving as a base resin and a solid plasticizer, and then used as a heat-sensitive adhesive.

### - Thermoplastic resin -

The thermoplastic resin is not particularly limited and may be suitably selected in accordance with the intended use, and a (meth)acrylic polymer emulsion is preferably used. The (meth)acrylic polymer emulsion is not particularly limited, and those commonly used in various acrylic adhesives can be used. For example, a (meth)acrylic polymer emulsion can be readily produced by a known emulsification polymerization method of (meth)acrylic acid ester. As the known emulsification polymerization method, batch-type polymer polymerization method, sequential addition polymerization method, and seed polymerization method are exemplified.

Examples of the (meth)acrylic acid ester include methyl (meth)acrylate, ethyl (meth)acrylate, butyl (meth)acrylate, 2-ethylhexyl (meth)acrylate, glycidyl (meth)acrylate, and 2-hydroxyethyl (meth)acrylate. These may be used alone or in combination.

In place of the (meth)acrylic acid ester for imparting storage stability to a resultant emulsion, a small amount of (meth)acrylic acid may be used. Further, as desired, a copolymerizable monomer such as vinyl acetate and styrene may be used in combination with the (meth)acrylic acid to such an extent that it does not impair the adhesive strength of the (meth)acrylic ester polymer.

The glass transition temperature of a polymer containing the (meth)acrylic ester as a main component is preferably -70°C to -30°C. When the glass transition temperature is higher than -30°C, the adhesiveness of the resultant heat-sensitive adhesive may degrade, and when it is lower than -70°C, the blocking resistance thereof may degrade.

As the emulsifier to be used in the acrylic polymer emulsion, anionic emulsifiers, partially saponified polyvinyl alcohols, etc. may be used. The use amount of the emulsifier is preferably 0.1 parts by mass to 5 parts by mass per 100 parts by mass of the polymer, and more preferably 0.5 parts by mass to 3 parts by mass.

The amount of the thermoplastic resin contained in the heat-sensitive adhesive is preferably 10% by mass to 60% by mass, and more preferably 15% by mass to 50% by mass. When the amount of the thermoplastic resin is less than 10% by mass or more than 60% by mass, unfavorably, it leads to a reduction in adhesive force of the resultant heat-sensitive adhesive. Further, when the amount of the thermoplastic resin is more than 60% by mass, troubles during storage, specifically, such troubles that its adhesive force is exerted at normal storage ambient temperature (blocking), may occur.

### - Solid plasticizer -

As the solid plasticizer, a plasticizer that is solid at room temperature and is melted by being heated is used. The melting point of the solid plasticizer is preferably 80°C or higher, and the upper limit of the melting point is approximately 200°C. When the melting point is lower than 80°C, troubles during storage, specifically, such troubles that its adhesive force is exerted at normal storage ambient temperature (blocking), may occur. Also, it may cause troubles during production process, such a trouble that its adhesive force is exerted when a heat-sensitive adhesive layer coating liquid is applied onto a support and dried. When the melting point is higher than 200°C, a large amount of energy is required to exert its adhesive force, causing a trouble in practical use. When heat-sensitive recording paper is used as a support and its adhesive force is exerted with a large amount of energy, the printed image may be unreadable because the heat-sensitive recording layer itself is color-developed.

As the solid plasticizer, for instance, the following are exemplified: (1) benzotriazole compounds represented by the following Structural Formula (1); triphenylphosphine compounds represented by the following Structural Formula (2); compounds represented by the following Structural Formula (3); hydroxybenzoate compounds represented by the following Structural Formula (4); and compounds represented by the following Structural Formulas (5) to (11).

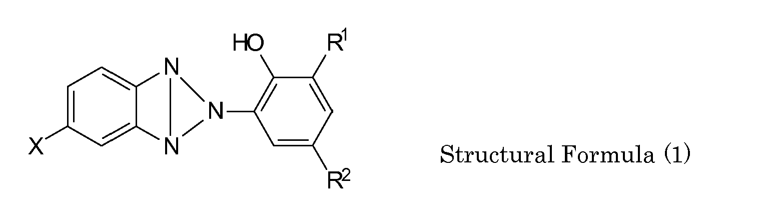

In Structural Formula (1), R¹ and R² may be identical to each other or different from each other, and each represents any one of a hydrogen atom, an alkyl group and an α, α-dimethylbenzyl group; and X represents one of a hydrogen atom and a halogen atom.

In the Structural Formula (1), the alkyl group preferably has 1 to 8 carbon atoms, and examples of such an alkyl group include methyl group, ethyl group, n-propyl group, n-butyl group, n-pentyl group, n-hexyl group, and n-heptyl group, each of which groups may be further substituted by a substituent.

Examples of the substituent include hydroxyl group, halogen atoms, nitro group, carboxyl group, cyano group, alkyl group that may have a specific substituent (e.g. halogen atom, nitro group), aryl group, and heterocyclic group.

The halogen atoms encompass fluorine, chlorine and iodine atoms.

Examples of the benzotriazole compounds represented by Structural Formula (1) include 2-(2'-hydroxy-5'-methylphenyl)benzotriazole, 2-(2'-hydroxy-5'-t-octylphenyl)benzotriazole, 2-(2'-hydroxy-3'-t-butyl-5'-methylphenyl)-5-chlorobenzotriazole, 2-(2'-hydroxy-3',5'-di-t-amylphenyl)benzotriazole, 2-(2'-hydroxy-3',5'-t-butylphenyl)-5-chlorobenzotriazole, 2-[2'-hydroxy-3',5'-di(1,1-dimethylbenzyl)phenyl]benzotriazole, 2-(2'-hydroxy-3',5'-di-t-butylphenyl)benzotriazole, and 2-(2'-hydroxy-3'-sec-butyl-5'-t-butylphenyl)benzotriazole.

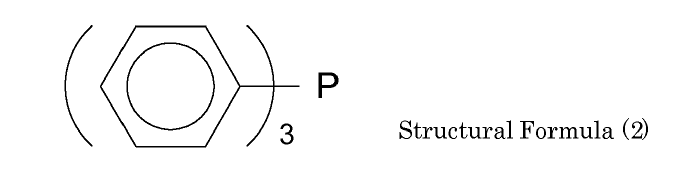

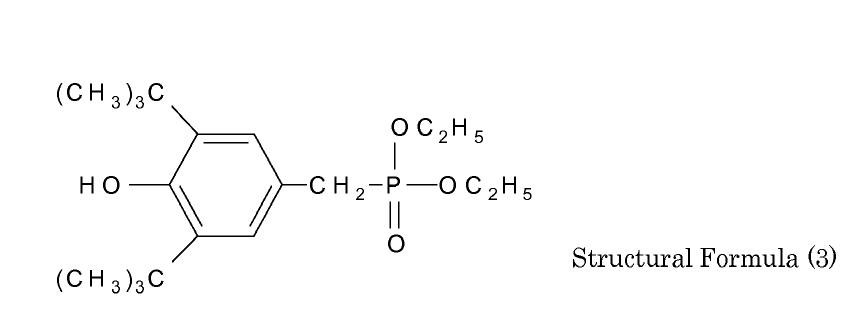

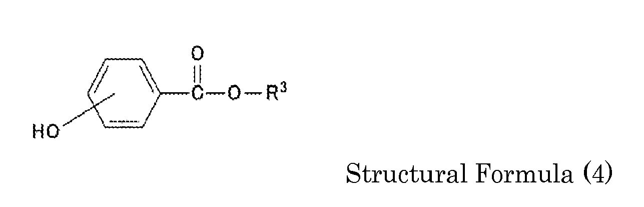

In Structural Formula (4), R³ represents any one of an alkyl group having 1 to 18 carbon atoms, a cyclohexyl group, an alkenyl group, an aralkyl group (which may have a substituent in an aromatic ring), and a phenyl group.

Examples of the hydroxybenzoate compounds represented by Structural Formula (4) include methyl m-hydroxybenzoate, ethyl m-hydroxybenzoate, phenyl m-hydroxybenzoate, methyl p-hydroxybenzoate, ethyl p-hydroxybenzoate, n-propyl p-hydroxybenzoate, n-butyl p-hydroxybenzoate, stearyl p-hydroxybenzoate, cyclohexyl p-hydroxybenzoate, benzyl p-hydroxybenzoate, 4-chlorobenzyl p-hydroxybenzoate, 4-methylbenzyl p-hydroxybenzoate and phenyl p-hydroxybenzoate.

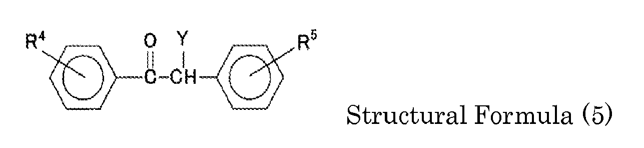

In Structural Formula (5), R⁴ and R⁵ may be identical to each other or different from each other, and represents one of an alkyl group and an alkoxy group; and Y represents one of a hydrogen atom and a hydroxyl group.

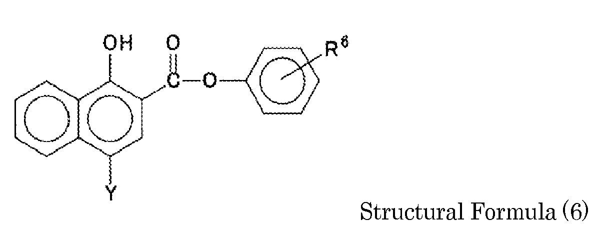

In Structural Formula (6), R⁶ represents any one of a hydrogen atom, a halogen atom, an alkyl group, and an alkoxy group; and Y represents one of a hydrogen atom and a hydroxyl group.

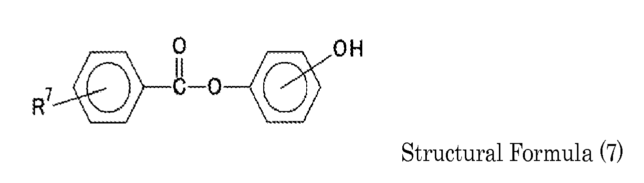

In Structural Formula (7), R⁷ represents any one of a hydrogen atom, a halogen atom, an alkyl group and an alkoxy group.

Examples of the alkyl groups in Structural Formulas (5) to (7) include alkyl groups similar to those suitable for the alkyl group in Structural Formula (1).

Examples of the alkoxy groups in Structural Formulas (5) to (7) include methoxy group, ethoxy group, propyloxy group, i-propyloxy group, butoxy group, i-butoxy group, t-butoxy group, pentyloxy group, hexyloxy group, cyclohexyloxy group, heptyloxy group, octyloxy group, 2-ethylhexyloxy group, nonyloxy group, decyloxy group, 3,7-dimethyloctyloxy group, lauryoxy group.

Examples of the compounds represented by Structural Formula (5) include toloin, anisoin, m-anisoin, deoxytoloin, deoxyanisoin, 4,4'-diethylbenzoin, and 4,4'-diethoxybenzoin. These may be used alone or in combination.

Examples of the compounds represented by Structural Formula (6) include 1-hydroxy-2-phenyl naphthoate, 1-hydroxy-2-p-chlorophenyl naphthoate, 1-hydroxy-2-o-chlorophenyl naphthoate, 1-hydroxy-2-p-methylphenyl naphthoate, 1-hydroxy-2-o-methylphenyl naphthoate, 1,4-dihydroxy-2-phenyl naphthoate, 1,4-dihydroxy-2- p-chlorophenyl naphthoate and 1,4-dihydroxy-2-o-chlorophenyl naphthoate. These may be used alone or in combination.

Examples of the compounds represented by Structural Formula (7) include 3-hydroxyphenyl benzoate, 4-hydroxyphenyl benzoate, 2-hydroxyphenyl benzoate, o-methyl 3-hydroxyphenyl benzoate and p-chloro-3-hydroxyphenyl benzoate. These compounds may be used alone or in combination.

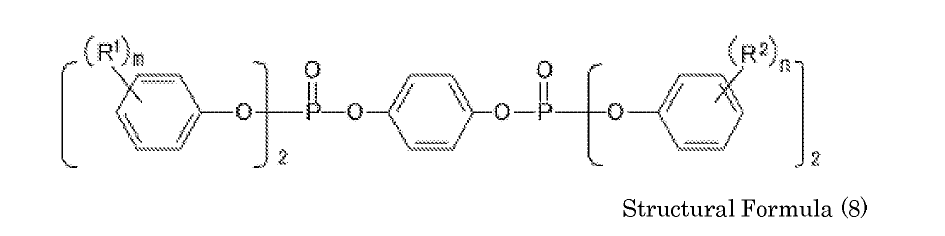

In Structural Formula (8), R¹ and R² may be identical to each other or different from each other, and represents a hydrogen atom or an alkyl group; and each of "m" and "n" represents an integer of 1 to 5.

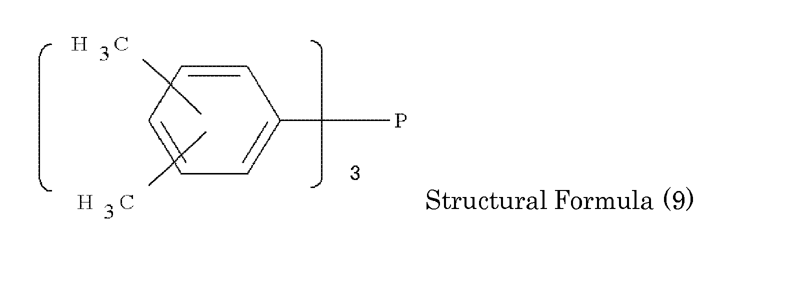

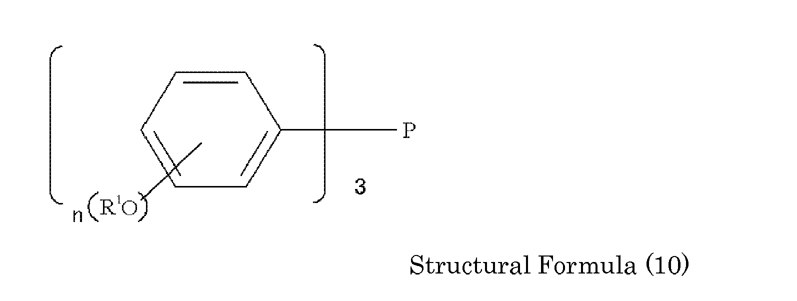

In Structural Formula (10), R¹ represents a hydrogen atom or an alkyl group; and "n" represents an integer of 1 to 5.

The solid plasticizer represented by any one of the Structural Formulas (1) to (10) has a volume average particle diameter of 10 µm or less; it is preferred that the solid plasticizer be used after being pulverized so as to have a volume average particle diameter of 3 µm or less. By further pulverizing the solid plasticizer so as to have a diameter smaller than 3 µm, e.g. 0.5 µm or less, dynamic thermal sensitivity of the resultant heat-sensitive adhesive is enhanced, and the solid plasticizer is miscible with the thermoplastic resin and the adhesion-imparting agent, thereby yielding a thermal-active adhesive.

Besides using the solid plasticizer alone, the solid plasticizer can be used in combination with compounds represented by Structural Formulas (1) to (10) at a given mixture ratio. In this case, the mixture ratio can be adjusted arbitrarily.

As the solid plasticizer to be used in the present invention, it is preferable, from the perspective of adhesiveness to corrugated cardboard at a 0°C temperature, to use a compound represented by at least any one of Structural Formulas (1), (2) and (3). More specifically, a mixture of a compound represented by Structural Formula (1) and a compound represented by a Structural Formula (2), and a compound represented by Structural Formula (3) are particularly preferable.

The amount of the solid plasticizer contained in the heat-sensitive adhesive is preferably 25% by mass to 80% by mass, and more preferably 35% by mass to 70% by mass. When the amount of the solid plasticizer is less than 25% by mass and it is used in combination with a thermoplastic resin, blocking is likely to occur and a reduction in adhesive may be caused. When the amount is more than 80% by mass, a reduction in adhesive force may occur.

The amount of the triphenylphosphine represented by Structural Formula (2) in the solid plasticizer is preferably 80% by mass to 95% by mass, and more preferably 80% by mass to 90% by mass. When the amount of the triphenylphosphine is less than 80% by mass, the adhesive force of the resultant heat-sensitive adhesive material after being affixed to an adherend at a temperature of 23°C to 40°C becomes weak. When it is more than 95% by mass, the delayed property and blocking resistance may degrade.

In the heat-sensitive adhesive, other components such as eutectic agent, dispersant, antifoaming agent, thickener, and blocking inhibitor may be added in accordance with the necessity.

### (Heat-Sensitive Adhesive Material)

A heat-sensitive adhesive of the present invention can be used in the form of a heat-sensitive adhesive material, which is obtained by applying the heat-sensitive adhesive onto a support.

The heat-sensitive adhesive material of the present invention has a support and a heat-sensitive adhesive layer provided on one surface of the support, in accordance with the necessity, may have an under layer (intermediate layer) between the support and the heat-sensitive adhesive layer, and may further have other layers as required. Note that on a surface of the support opposite to the surface provided with the heat-sensitive adhesive layer, various types of recording layer and protective layer may be provided.

The support is not particularly limited as to the shape, structure, size etc. and may be suitably selected in accordance with the intended use. The support may have, for example, a plate-shape. The support may have a single-layer structure or a multi-layered structure. The size can be suitably selected in accordance with the desired size of the heat-sensitive adhesive material.

Materials of the support are not particularly limited and may be suitably selected in accordance with the intended use, and broadly classified into inorganic materials and organic materials. Examples of the inorganic materials include glass, quartz, silicon, silicon oxide, aluminum oxide, SiO₂ and metals. Examples of the organic materials include papers such as high-quality paper, art paper, coated paper and synthetic paper; cellulose derivatives such as cellulose triacetate; polyester resins such as polyethylene terephthalate (PET) and polybutylene terephthalate; and polyolefins such as polycarbonates, polystyrene, polymethyl methacrylate, polyamide, polyethylene and polypropylene. Among these, high-quality paper, coated paper, plastic film and synthetic paper are particularly preferable.

With a view toward improving the adhesive strength of the coat layer(s), the support is preferably subjected to a surface modification such as corona discharging treatment, oxidation reaction (with chromic acid etc.), etching treatment, easy-adhesion treatment, and charge prevention treatment. It is preferred that a white pigment such as titanium oxide be added to the support.

The thickness of the support is not particularly limited and may be suitably adjusted in accordance with the intended use. It is preferably 50 µm to 2,000 µm, and more preferably 100 µm to 1,000 µm.

By applying the heat-sensitive adhesive of the present invention onto one surface of a support, it is possible to obtain a heat-sensitive adhesive material which has strong adhesiveness to vinyl chloride wraps, polyolefine wraps, especially to corrugated cardboard and is suprior in blocking resistance.

The heat-sensitive adhesive material is produced by applying the heat-sensitive adhesive onto the support using a bar-coater, a roll coater, an applicator or a hot-melt coater, followed by drying treatment utilizing a heat source based on an infrared ray, microwave or high-frequency wave, besides drying with hot air.

The coating amount of the heat-sensitive adhesive layer is normally within the range of 2 g/m² to 35 g/m², more preferably within the range of 5 g/m² to 25 g/m². When the coating amount is less than 2 g/m², a sufficient adhesive strength may cannot be obtained when the layer is bonded by heat application. In contrast, when the coating amount is more than 35 g/m², the adhesion effect is saturated and it is economically unfavorable.

### < Under layer >

In the present invention, by providing an under layer between the heat-sensitive adhesive layer and the support, it is possible to increase the adhesive force of the resultant heat-sensitive adhesive material to adherends.

The under layer may consist of a hollow under layer containing hollow particles and/or an adhesive under layer. Examples of the under layer configuration include (1) an embodiment having only a hollow under layer, and (2) an embodiment having an adhesive under layer and a hollow under layer. In the case of (2), it is preferred that the adhesive under layer and the hollow under layer be laid over a support in this order.

### - Hollow under layer -

The hollow under layer contains at least a thermoplastic resin and hollow particles and further contains other components as required.

By incorporating the hollow under layer in the under layer, the heat efficiency can be improved, allowing the resultant heat-sensitive adhesive material to increase its adhesive force.

As the thermoplastic resin, a thermoplastic resin having a glass transition temperature (Tg) of -70°C to -30°C may be used. Examples of the thermoplastic resin include natural rubber latexes each obtained by graft copolymerization of a vinyl monomer, styrene-butadiene copolymers, acrylic acid ester copolymers, methacrylic acid ester copolymers, acrylic acid ester-methacrylic acid ester copolymers, acrylic acid ester-acrylonitrile copolymers, acrylic acid ester-acrylonitrile-vinyl acetate copolymers, acrylic acid ester-styrene copolymers, acrylic acid ester-methacrylic acid ester-styrene copolymers, and ethylene-vinyl acetate copolymers. These may be used alone or in combination. Among them, acrylic acid ester copolymers, acrylic acid ester-acrylonitrile copolymers, acrylic acid ester-acrylonitrile-vinyl acetate copolymers, acrylic acid ester-styrene copolymers, and acrylic acid ester-methacrylic acid ester-styrene copolymers are particularly preferable.

As the hollow particles, it is preferable to use spherically shaped plastic hollow particles having a volume average particle diameter of 2.0 µm to 5.0 µm and a hollow rate of 70% or higher, and it is more preferable to use spherically shaped hollow particles whose maximum particle diameter of 10.0 µm or less, a volume average particle diameter of 2.0 µm to 5.0 µm and a hollow rate of 70% or higher. The hollow rate is still more preferably 85% to 95%.

When the hollow rate is less than 70%, heat energy from a thermal head is discharged to the outside of the resultant heat-sensitive adhesive material through the support due to the insufficient heat insulation effect, which may reduce the effect of improving the adhesiveness. When the volume average particle diameter is larger than 5.0 µm and a heat-sensitive adhesive layer is formed on an under layer that contains such hollow particles, the heat-sensitive adhesive layer will not be formed at part of regions of large-size particles, and the resultant heat-sensitive adhesive material is liable to degrade in adhesiveness when thermally activated. When the volume average particle diameter is less than 2.0 µm, it becomes difficult to secure a hollow rate of 70% or higher, which may reduce the effect of improving the adhesiveness.

Here, the term "spherically shaped plastic hollow particles" means hollow particles which have been foamed in the sate where a thermoplastic resin is contained in the form of shells and air and other gases are contained therein. The term "hollow rate" means a ratio of the volume based on the outer diameter of a hollow particle to the volume based on the inner diameter (volume of the inside void).

Materials of the spherically shaped hollow particles are not particularly limited and may be suitably selected in accordance with the intended use. Examples thereof include vinylidene chloride-acrylonitrile copolymers, acrylonitrile-vinylidene chloride-methyl methacrylate copolymers, and acrylonitrile-methacrylonitrile-isobonylmethacrylate copolymers.

The mixing ratio of the hollow particles to the thermoplastic resin having a glass transition temperature of -70°C to -30°C in the hollow under layer is preferably 0.1 parts by mass to 2 parts by mass per 1 part by mass of the thermoplastic resin, and more preferably 0.3 parts by mass to 1 part by mass. When the mixed amount of the hollow particles is less than 0.1 parts by mass, the effect of improving adhesiveness may be reduced, and when it is more than 2 parts by mass, the adhesive force of the resultant heat-sensitive adhesive material may weaken due to the decrease in binding capability of the hollow under layer.

The hollow under layer is not particularly limited and can be formed by a method known in the art. For example, it can be favorably formed by a coating method with the use of an under layer coating liquid containing the above-mentioned components.

Examples of the coating method include blade coating, gravure coating, gravure offset coating, bar coating, roll coating, knife coating, air knife coating, comma coating, U comma coating, AKKU coating, smoothing coating, microgravure coating, reverse roll coating, four- or five-roll coating, dip coating, falling curtain coating, slide coating and die coating.

The coating amount of the hollow under layer coating liquid is preferably 1 g/m² to 35 g/m², based on dry coating weight, and more preferably 1 g/m² to 5 g/m². When the coating amount of the hollow under layer coating liquid is less than 1 g/m², a sufficient adhesive strength cannot be obtained at the time of bonding the hollow under layer by heat application and the heat insulation effect may be reduced. When it is more than 35 g/m², the adhesive strength and heat insulation effect may be saturated.

### - Adhesive under layer -

In the present invention, a further improvement in adhesive force of the resultant heat-sensitive adhesive material can be achieved by providing an adhesive under layer consisting of an adhesive resin between the hollow under layer containing hollow particles and the support.

When the heat sensitive adhesive material is provided with both a hollow under layer and an adhesive under layer, the coating amount of the hollow under layer is preferably 1g/m² to 5g/m², based on dry coating weight, and more preferably 1g/m² to 2g/m². When the coating amount of the hollow under layer is less than 1g/m², the heat insulation effect becomes small under thermal activation conditions. When it is more than 5g/m², the effect of improving the adhesiveness obtained from the adhesive under layer is inconveniently reduced.

The coating amount of the adhesive under layer is preferably 2 g/m² to 35 g/m², based on dry coating weight, and more preferably 4 g/m² to 35 g/m².

As a thermoplastic resin in the adhesive under layer, a thermoplastic resin having a glass transition temperature (Tg) of -70°C to -5°C may be used. Examples of the thermoplastic resin include natural rubber latexes each obtained by graft copolymerization of a vinyl monomer, acrylic acid ester copolymers, methacrylic acid ester copolymers, acrylic acid ester-methacrylic acid ester copolymers, acrylic acid ester-styrene copolymers, acrylic acid ester-methacrylic acid ester-styrene copolymers, and ethylene-vinyl acetate copolymers. When a thermoplastic resin having high-glass transition temperature is used, the effect of the adhesive under layer and intermediate layer cannot be obtained at all, the adhesive force of the resultant heat-sensitive adhesive material to rough-surfaced adherends such as corrugated cardboard is weak, there is no choice but to rely only on the adhesive force of a heat-sensitive adhesive layer, which is formed on or above these layers. Meanwhile, most of resins have a glass transition temperature of -70°C or higher, and the use of a thermoplastic resin having a glass transition temperature lower than the lowest limit glass transition temperature, i.e. -70°C, involves no problem, but it is economically unfavorable because the cost of such a thermoplastic resin is high.

The method of forming the adhesive under layer is not particularly limited, and the layer can be formed by a method known in the art. For example, the adhesive under layer can be favorably formed by a coating method using an adhesive under layer coating liquid in which the above-mentioned components and as required, other components are dispersed with stirring in water. Examples of the coating method include blade coating, gravure coating, gravure offset coating, bar coating, roll coating, knife coating, air knife coating, comma coating, U comma coating, AKKU coating, smoothing coating, microgravure coating, reverse roll coating, four- or five-roll coating, dip coating, falling curtain coating, slide coating and die coating.

### < Heat-sensitive adhesive layer >

The heat-sensitive adhesive layer contains the heat-sensitive adhesive of the present invention.

The heat-sensitive adhesive of the present invention contains a thermoplastic resin and a thermofusible material, a non-thermofusible material, an adhesion-imparting agent, and a eutectic agent, and further contains other components in accordance with the necessity.

Details of these components are as described in the explanation of the heat-sensitive adhesive.

The method of forming the heat-sensitive adhesive layer is not particularly limited, and the layer can be formed by a method known in the art. For example, the heat-sensitive adhesive layer can be favorably formed by a coating method using a heat-sensitive adhesive layer coating liquid in which the above-mentioned components are contained. Examples of the coating method include blade coating, gravure coating, gravure offset coating, bar coating, roll coating, knife coating, air knife coating, comma coating, U comma coating, AKKU coating, smoothing coating, microgravure coating, reverse roll coating, four- or five-roll coating, dip coating, falling curtain coating, slide coating and die coating.

On the occasion of the coating or printing, the thermosensitive adhesive layer coating solution must be dried within such a temperature range that the thermofusible material and a eutectic agent used do not melt. As a means of drying, it is possible to employ a drying method utilizing a heat source based upon an infrared ray, a microwave or a high-frequency wave, besides drying with hot air.

The coating amount of the heat-sensitive adhesive coating liquid is preferably 5 g/m² to 30 g/m², based on dry coating weight, and more preferably 10 g/m² to 20 g/m². When the dry coating amount is less than 5 g/m², the resultant heat-sensitive adhesive material may not be affixed to an adherend with sufficient adhesive strength under low-temperature environment, and when it is more than 30 g/m², the heat insulation effect of the under layer may be reduced, which may cause poor economic efficiency.

The heat-sensitive adhesive material of the present invention, with the configuration described above, has strong adhesive force particularly to rough-surfaced adherends such as corrugated cardboard even under low-temperature environment, from 0°C to 10°C, and superior blocking resistance and is capable of exhibiting its adhesiveness (thermal activation) with low-energy.

In another embodiment of the heat-sensitive adhesive material of the present invention, on a surface of the support opposite to a surface on which the heat-sensitive adhesive layer is provided, the heat-sensitive adhesive material further has a recording layer, and may have a protective layer, and other layers in accordance with the necessity.

### < Recording layer >

The heat-sensitive adhesive material of the present invention allows for recording an image etc. by providing a recording layer on a surface of the support opposite to a surface provided with the heat-sensitive adhesive layer.

The recording layer is not particularly limited and may be suitably selected in accordance with the intended use. Suitable examples thereof include a heat-sensitive recording layer, a thermal transfer ink-receiving layer, and an inkjet ink-receiving layer.

### [Heat-sensitive adhesive material for heat-sensitive recording]

The heat-sensitive recording layer in the heat-sensitive adhesive material for heat-sensitive recording contains a leuco dye (color former), a color developer and a binder resin and further contains other components in accordance with the necessity.

The leuco dye is not particularly limited and may be suitably selected from among those known in the art. Examples thereof include triphenylmethane dyes, fluoran dyes, phenothiazine dyes, auramine dyes, spiropyran dyes, and indolinophthalide dyes.

Specific examples of the leuco dyes include 3,3-bis(p-dimethylaminophenyl)phthalide, 3,3-bis(p-dimethylaminophenyl)-6-dimethylaminophthalide (otherwise called "crystal violet lactone"), 3,3-bis(p-dimethylaminophenyl)-6-diethylaminophthalide, 3,3-bis(p-dimethylaminophenyl)-6-chlorphthalide, 3,3-bis(p-dibutylaminophenyl)phthalide, 3-cyclohexylamino-6-chlorfluoran, 3-dimethylamino-5,7-dimethylfluoran, 3-diethylamino-7-chlorfluoran, 3-diethylamino-7-methylfluoran, 3-diethylamino-7,8-benzfluoran, 3-diethylamino-6-methyl-7-chlorfluoran, 3-(N-p-tolyl-N-ethylamino)-6-methyl-7-anilinofluoran, 3-pyrrolidino-6-methyl-7-anilinofluoran, 2-{N-(3'-trifluormethylphenyl)amino}-6-diethylaminofluoran, 2-{3,6-bis(diethylamino)-9-(o-chloranilino)xanthyl benzoic acid lactam}, 3-diethylamino-6-methyl-7-(m-trichlormethylanilino)fluoran, 3-diethylamino-7-(o-chloranilino)fluoran, 3-dibutylamino-7-(o-chloranilino)fluoran, 3-N-methyl-N-amylamino-6-methyl-7-anilinofluoran, 3-N-methyl-N-cyclohexylamino-6-methyl-7-anilinofluoran, 3-diethylamino-6-methyl-7-anilinofluoran, 3-(N,N-diethylamino)-5-methyl-7-(N,N-dibenzylamino)fluoran, benzoyl leuco methylene blue, 6'-chloro-8'-methoxy-benzoindolino-pyrylospirane, 6'-bromo-3'-methoxy-benzoindolino-pyrylospirane, 3-(2'-hydroxy-4'-dimethylaminophenyl)-3-(2'-methoxy-5'-chlorphenyl) phthalide, 3-(2'-hydroxy-4'-dimethylaminophenyl)-3-(2'-methoxy-5'-nitrophenyl) phthalide, 3-(2'-hydroxy-4'-diethylaminophenyl)-3-(2'-methoxy-5'-methylphenyl) phthalide, 3-diethylamino-6-methyl-7-(2',4'-dimethylanilino)fluoran, 3-(2'-methoxy-4'-dimethylaminophenyl)-3-(2'-hydroxy-4'-chlor-5'-methylphenyl)phthalide, 3-morpholino-7-(N-propyl-trifluoromethylanilino)fluoran, 3-pyrrolidino- 7-trifluoromethylanilinofluoran, 3-diethylamino-5-chloro-7-(N-benzyl-trifluoromethylanilino)fluoran, 3-pyrrolidino-7-(di-p-chlorphenyl)methylaminofluoran, 3-diethylamino-5-chlor-7-(α-phenylethylamino)fluoran, 3-(N-ethyl-p-toluidino)-7-(α-phenylethylamino)fluoran, 3-diethylamino-7-(o-methoxycarbonylphenylamino)fluoran, 3-diethylamino-5-methyl-7-(α-phenylethylamino)fluoran, 3-diethylamino-7-piperidinofluoran, 2-chloro-3-(N-methyltoluidino)-7-(p-n-butylanilino)fluoran, 3-(N-benzyl-N-cyclohexylamino)-5,6-benzo-7-α-naphthylamino-4'-o-bromofluoran, 3-diethylamino-6-methyl-7-mesitydino-4',5'-benzofluoran, 3-diethylamino-6-methyl-7-(2',4'-dimethylanilino)fluoran, 3-(p-dimethylaminophenyl)-3-{1,1-bis(p-dimethylaminophenyl) ethylene-2-yl}phthalide, 3-(p-dimethylaminophenyl)-3-{1,1-bis(p-dimethylaminophenyl) ethylene-2-yl}-6-dimethylaminophthalide, 3-(p-dimethylaminophenyl)-3-(1-p-dimethylaminophenyl-1-phenylethylene-2-yl)phthalide, 3-(p-dimethylaminophenyl-3-(1-p-dimethylaminophenyl-1-p-chlorophenylethylene-2-yl)-6-dimethylaminophthalide), 3-(4'-dimethylamino-2'-methoxy)-3-(1"-p-dimethylaminophenyl-1"-p-chlorophenyl-1",3"-butadiene-4"-yl)benzophthalide, 3-(4'-dimethylamino-2'-benzyloxy)-3-(1"-p-dimethylaminophenyl-1"-phenyl-1",3"-butadiene-4"-yl)benzophthalide, 3-dimethylamino-6-dimethylamino-fluorene-9-spiro-3'-(6'-dimethylamino)phthalide, 3,3-bis{2-(p-dimethylaminophenyl)-2-(p-methoxyphenyl)ethenyl}-4,5, 6, 7-tetrachlorophthalide, 3-bis{1,1-bis(4-pyrrolidinophenyl)ethylene-2-yl}-5,6-dichloro-4,7-dibromophthalide, bis(p-dimethylaminostyryl)-1-naphthalenesulfonylmethane, 3-(N-methyl-N-propylamino)-6-methyl-7-anilidefluoran, 3-diethylamino-6-methyl-7-anilinofluoran, 3,6-bis(dimethylamino)fluoranspiro(9,3')-6'-dimethylaminophthalide, 3-diethylamino-6-chlor-7-anilinofluoran, 3-N-ethyl-N-(2-ethoxypropyl)amino-6-methyl-7-anilinofluoran, 3-N-ethyl-N-tetrahydrofurfurylamino-6-methyl-7-anilinofluoran, 3-diethylamino-6-methyl-7-mesitydino-4',5'-benzofluoran, 3-N-methyl-N-isobutyl-6-methyl-7-anilinofluoran and 3-N-ethyl-N-isoamyl-6-methyl-7-anilinofluoran. These leuco dyes may be used alone or in combination.

The color developer is not particularly limited and may be suitably selected from known electron-accepting compounds in accordance with the intended use. Examples thereof include phenolic compounds, thiophenolic compounds, thiourea derivatives, organic acids and metal salts thereof.

Specific examples of the color developer include 4,4'-isopropylidenebisphenol, 3,4'-isopropylidenebisphenol, 4,4'-isopropylidenebis(o-methylphenol), 4,4'-s-butylidenebisphenol, 4,4'-isopropylidenebis(o-t-butylphenol), 4,4'-cyclohexylidenediphenol, 4,4'-isopropylidenebis(2-chlorophenol), 2,2'-methylenebis(4-methyl-6-t-butylphenol), 2,2'-methylenebis(4-ethyl-6-t-butylphenol), 4,4'-butylidenebis(6-t-butyl-2-methyl)phenol, 1,1, 3-tris(2-methyl-4-hydroxy-5-t-butylphenyl)butane, 1,1,3-tris(2-methyl-4-hydroxy-5-cyclohexylphenyl)butane, 4,4'-thiobis(6-t-butyl-2-methyl)phenol, 4,4'-diphenolsulfone, 4,2'-diphenolsulfone, 4-isopropoxy-4'-hydroxydiphenylsulfone, 4-benzyloxy-4'-hydroxydiphenylsulfone, 4,4'-diphenolsulfoxide, isopropyl p-hydroxybenzoate, benzyl p-hydroxybenzoate, benzyl protocatechuate, stearyl gallate, lauryl gallate, octyl gallate, 1,7-bis(4-hydroxyphenylthio)-3,5-dioxaheptane, 1,5-bis(4-hydroxyphenylthio)-3-oxaheptane, 1,3-bis(4-hydroxyphenylthio)-propane, 2,2'-methylenebis(4-ethyl-6-t-butylphenol), 1,3-bis(4-hydroxyphenylthio)-2-hydroxypropane, N,N'-diphenylthiourea, N,N'-di(m-chlorophenyl)thiourea, salicylanilide, 5-chloro-salicylanilide, salicyl-o-chloroanilide, 2-hydroxy-3-naphthoic acid, antipyrine complexes of zinc thiocyanate, 2-acetyloxy-3-zinc salts of naphthoic acid, 2-hydroxy-1-naphthoic acid, 1-hydroxy-2-naphthoic acid, metal salts (e.g. zinc salts, aluminum salts and calcium salts) of hydroxynaphthoic acid, bis-(4-hydroxyphenyl)acetic acid methyl ester, bis-(4-hydroxyphenyl)acetic acid benzyl ester, 4-{β-(p-methoxyphenoxy)ethoxy}salicylate, 1,3-bis(4-hydroxycumyl)benzene, 1,4-bis(4-hydroxycumyl)benzene, 2,4'-diphenolsulfone, 3,3'-diallyl-4,4'-diphenolsulfone, antipyrine complexes of α,α-bis(4-hydroxyphenyl)-α-methyltoluene zinc thiocyanate, tetrabromobisphenol A, tetrabromobisphenol S, 4,4'-thiobis(2-methylphenol), 3,4-hydroxy-4'-methyl-diphenylsulfone and 4,4'-thiobis(2-chlorophenol). These color developers may be used alone or in combination.

The additive amount of the color developer in the heat-sensitive recording layer is not particularly limited and may be suitably adjusted in accordance with the intended use. It is preferably 1 part by mass to 20 parts by mass per 1 part by mass of the color former (leuco dye), and more preferably 2 parts by mass to 10 parts by mass.

The binder resin is not particularly limited and may be suitably selected from known binder resins in accordance with the intended use. Examples thereof include polyvinyl alcohol; starch and derivatives thereof; cellulose derivatives such as methoxycellulose, hydroxyethylcellulose, carboxymethylcellulose, methylcellulose and ethylcellulose; water-soluble polymers such as sodium polyacrylate, polyvinylpyrrolidone, acrylamide-acrylic acid ester copolymers, acrylamide-acrylic acid ester-methacrylic acid terpolymers, styrene-maleic anhydride copolymer alkali salts, isobutylene-maleic anhydride copolymer alkali salts, polyacrylamide, sodium alginate, gelatin and casein; emulsions such as polyvinyl acetate, polyurethane, polyacrylic acid, polyacrylic acid esters, polymethacrylic acid esters, polybutyl methacrylate, vinyl chloride-vinyl acetate copolymers and ethylene-vinyl acetate copolymers; and latexes such as styrene-butadiene copolymers and styrene-butadiene-acrylic copolymers. These binder resins be used alone or in combination.

In the heat-sensitive recording layer, various types of thermofusible material can be used as fillers. Examples thereof include fatty acids such as stearic acid and behenic acid; fatty acid amides such as stearic acid amide and palmitic acid amide; fatty acid metal salts such as zinc stearate, aluminum stearate, calcium stearate, zinc palmitate and zinc behenate; and p-benzylbiphenyl, terphenyl, triphenylmethane, benzyl p-benzyloxybenzoate, β-benzyloxynaphthalene, β-naphthoic acid phenyl ester, 1-hydroxy-2-naphthoic acid phenyl ester, 1-hydroxy-2-naphthoic acid methyl ester, diphenyl carbonate, terephthalic acid dibenzyl ester, terephthalic acid dimethyl ester, 1,4-dimethoxynaphthalene, 1,4-diethoxynaphthalene, 1,4-dibenzyloxynaphthalene, 1,2-bis(phenoxy)ethane, 1,2-bis(3-methylphenoxy)ethane, 1,2-bis(4-methylphenoxy)ethane, 1,4-bis(phenoxy)butane, 1,4-bis(phenoxy)-2-butene, 1,2-bis(4-methoxyphenylthio)ethane, 1,3-bis(2-vinyloxyethoxy)benzene, 1,4-bis(2-vinyloxyethoxy)benzene, p-(2-vinyloxyethoxy)biphenyl, p-aryloxybiphenyl, p-propargyloxybiphenyl, dibenzoyloxymethane, 1,3-dibenzoyloxypropane, dibenzyldisulfide, 1,1-diphenylethanol, 1,1-diphenylpropanol, p-(benzyloxy)benzyl alcohol, 1,3-diphenoxy-2-propanol, N-octadecylcarbamoyl-p-methoxycarbonylbenzene, N-octadecylcarbamoylbenzene, oxalic acid dibenzyl ester and 1,5-bis(p-methoxyphenyloxy)-3-oxapentane. These thermofusible materials may be used alone or in combination.

Further, in the heat-sensitive recording layer, various auxiliary additive components such as surfactant and lubricant may be additionally used in accordance with the necessity. Examples of the lubricant include higher aliphatic acids or metal salts thereof, higher aliphatic acid amides, higher aliphatic acid esters, animal waxes, vegetable waxes, mineral waxes and petroleum waxes.

The method of forming the heat-sensitive recording layer is not particularly limited, and a conventionally known method can be employed. For instance, the heat-sensitive recording layer can be formed as follows: a leuco dye and a color developer are separately pulverized and dispersed along with a binder and other components with the use of a dispersing device such as a ball mill, attritor or sand mill until the dispersion particle diameter becomes 1 µm to 3 µm; afterward, these ingredients are mixed together, with addition of a filler, a thermofusible material (sensitizer) dispersion liquid and the like if necessary, according to a certain formulation so as to prepare a heat-sensitive recording layer coating liquid, and the heat-sensitive recording layer coating solution is applied onto a support.

The thickness of the heat-sensitive recording layer cannot be unequivocally defined because it varies depending on the composition of the heat-sensitive recording layer, the use of the heat-sensitive adhesive material, etc. However, the thickness is preferably 1 µm to 50 µm, and more preferably 3 µm to 20 µm.

### [Heat-sensitive adhesive material for thermal transfer recording or inkjet recording]

Each of a thermal transfer ink-receiving layer in the heat-sensitive adhesive material for thermal transfer recording and an inkjet ink-receiving layer in the heat-sensitive adhesive material for inkjet recording contains a filler, a binder resin, a water resistant agent and further contains other components in accordance with the necessity.

The filler is not particularly limited and may be suitably selected in accordance with the intended use. Examples thereof include fine powders of calcium carbonate, silica, titanium oxide, aluminum hydroxide, clay, fired clay, magnesium silicate, magnesium carbonate, white carbon, zinc oxide, barium sulfate, surface-treated calcium carbonate, surface-treated silica, urea-formalin resins, styrene-methacrylic acid copolymers and polystyrene.

The binder resin is not particularly limited and may be suitably selected from known water-soluble resins in accordance with the intended use. Examples thereof include polyvinyl alcohol; starch and derivatives thereof; cellulose derivatives such as methoxycellulose, hydroxyethylcellulose, carboxymethylcellulose, methylcellulose and ethylcellulose; and water-soluble polymers such as sodium polyacrylate, polyvinylpyrrolidone, acrylamide-acrylic acid ester copolymers, acrylamide-acrylic acid ester-methacrylic acid terpolymers, styrene-maleic anhydride copolymer alkali salts, isobutylene-maleic anhydride copolymer alkali salts, polyacrylamide, sodium alginate, gelatin and casein. These binder resins may be used alone or in combination.

The ratio of the water-soluble resin to the filler in the ink receiving layer is related to blocking resistance and is preferably in the range of 0.1:1 to 0.2:1 based on a mass ratio (solid content).

The water-resistant agent is not particularly limited and may be suitably selected in accordance with the intended use. Examples thereof include formaldehyde, glyoxal, chromium alum, melamine, melamine-formaldehyde resins, polyamide resins and polyamide-epichlorohydrin resins.

The ratio of the water-resistant agent to the water-soluble resin is also related to blocking resistance and is preferably in the range of 0.3:1to 0.5:1 based on a mass ratio (solid content). As just described, the ink receiving layer is formed with a specific ratio of the water-soluble resin to the filler and also with a specific ratio of the water-resistant agent to the water-soluble resin. Further, by treating the surface of the ink receiving layer with a calender or the like so as to become 500 sec or more in smoothness, it is possible to further improve printing quality as well as the effects produced by the filler.

### < Protective layer >

The protective layer contains a resin component and further contains a combination of polyvinyl alcohol with a hydrazide compound in accordance with the necessity.

In particular, a protective layer containing polyvinyl alcohol having a reactive carbonyl group and a hydrazide compound as a crosslinking agent is highly resistant to heat and water and is less subject to pressure, temperature and humidity applied, and thus it is capable of greatly improving the blocking resistance.

The polyvinyl alcohol having a reactive carbonyl group can be produced by a known method, for example, by copolymerizing a vinyl monomer having a reactive carbonyl group with fatty acid vinyl ester to prepare a copolymer, and saponifying the copolymer. Examples of the vinyl monomer having a reactive carbonyl group include those having an ester residue and those having an acetone group. Among these, vinyl monomers having a diacetone group are preferable. More specifically, diacetone acrylamide and metadiacetone acrylamide are preferable. Examples of the fatty acid vinyl ester include vinyl formate, vinyl acetate, and vinyl propionate with vinyl acetate being particularly preferable.

The polyvinyl alcohol (PVA) having a reactive carbonyl group may be produced by copolymerization of other copolymerizable vinyl monomers. Examples of the copolymerizable monomers include acrylic acid esters, butadiene, ethylene, propylene, acrylic acid, methacrylic acid, maleic acid, maleic anhydride and itaconic acid.

The amount of the reactive carbonyl group contained in the polyvinyl alcohol having a reactive carbonyl group is preferably 0.5 mol% to 20 mol% to the whole polymer, and in view of water resistance, it is more preferably 2 mol% to 10 mol%. When the amount is less than 2 mol%, water resistance sufficient for practical use cannot be yielded. When it is more than 10 mol%, water resistance does not improve any further only to increase the cost, which is not economical. The polymerization degree of the polyvinyl alcohol having a reactive carbonyl group is preferably 300 to 3,000, and more preferably 500 to 2,200. The saponification degree of the polyvinyl alcohol having a reactive carbonyl group is preferably 80% or more.

The hydrazide compound is not particularly limited and may be suitably selected in accordance with the intended use, as long as it has a hydrazide group. Examples thereof include carbohydrazide, oxalic acid dihydrazide, formic acid hydrazide, acetic acid hydrazide, malonic acid dihydrazide, succinic acid dihydrazide, adipic acid dihydrazide, azelaic acid hydrazide, sebacic acid dihydrazide, dodecanedioic acid dihydrazide, maleic acid dihydrazide, fumaric acid hydrazide, itaconic acid dihydrazide, benzoic acid hydrazide, glutaric acid dihydrazide, diglycol acid hydrazide, tartaric acid dihydrazide, malic acid dihydrazide, isophthalic acid hydrazide, terephthalic acid dihydrazide, 2,7-naphthoic acid dihydrazide and polyacrylic acid hydrazide. These compounds may be used alone or in combination. Among these compounds, adipic acid dihydrazide is particularly preferable from the perspective of water resistance and safety.

The amount of the hydrazide compound contained is preferably 5 parts by mass to 40 parts by mass per100 parts by mass of the polyvinyl alcohol having a reactive carbonyl group, and more preferably 15 parts by mass to 25 parts by mass,

It is preferable that a filler be contained in the protective layer. The filler is preferably a basic filler, and examples thereof include aluminum hydroxide, calcium carbonate, talc and alkaline silicic acids, with aluminum hydroxide and calcium carbonate being preferable in view of matching with a thermal head (adhesion of residues), and aluminum hydroxide being particularly preferable in view of controlling the pH by means of appropriate water solubility. As the filler to be incorporated into the heat-sensitive recording layer, conventionally known fillers can be used. Examples thereof include inorganic pigments such as calcium carbonate, zinc oxide, aluminum oxide, titanium dioxide, silica, aluminum hydroxide, barium sulfate, talc, kaolin, alumina and clay; or conventionally known organic pigments, but not limited thereto. In view of water resistance (resistance to delamination by exposure to water), silica, kaolin and alumina, which are acidic pigments (i.e. which exhibit acidity in aqueous solution), are preferable. Particularly preferred is silica in terms of color development density.

The method of forming the protective layer is not particularly limited, and a conventionally known method can be employed. For instance, the protective layer can be formed by preparing a protective layer coating liquid according to a conventional method, and applying the protective layer coating liquid onto the recording layer.

The thickness of the protective layer is not particularly limited and may be suitably adjusted in accordance with the intended use, with the range of 1.0 µm to 7.0 µm being preferable.

Further, it is also possible to provide an intermediate layer and the like between the support and the heat-sensitive recording layer in accordance with the necessity. For instance, the pigment containing hollow particles, the binder, the thermofusible material and the surfactant mentioned above can be used as components to constitute the layer(s).

The heat-sensitive adhesive material of the present invention may be cut before or after the heat-sensitive layer is thermally activated (heated). In this case, if slits are made in the heat-sensitive adhesive material beforehand, it is advantageous in that it can be applied to a variety of uses such as labels and tags.

The form of the heat-sensitive adhesive material of the present invention is not particularly limited, and suitable examples thereof include the form of a label, the form of a sheet, the form of a label sheet and the form of a roll. In particular, it is preferable that the heat-sensitive adhesive material be wound around a cylindrical core material and stored in the form of a roll with a long length, in view of convenience, its storage place and handleability.

The adherend to which the heat-sensitive adhesive material of the present invention is affixed is not particularly limited, and the size, form, structure, material and the like thereof may be suitably selected in accordance with the intended use. Suitable examples of the material include resin plates made of polyolefins (polyethylene, polypropylene, etc.), acrylic, polyethylene terephthalate (PET), polystyrene and nylon; metal plates made of SUS and aluminum; paper products such as envelopes and corrugated cardboard; wraps made of polyolefins, and wraps made of polyvinyl chloride; and unwoven cloth made of polyethylene (envelopes, etc.).

The method of thermally activating the heat-sensitive adhesive layer of the heat-sensitive adhesive material of the present invention is not particularly limited and may be suitably selected in accordance with the intended use. Examples thereof include an activation method utilizing hot air, an activation method utilizing a heat roll, and an activation method utilizing a thermal head. Among these, an activation method utilizing a thermal head is preferable. A thermal activation method of a heat-sensitive adhesive material according to the present invention is particularly preferable, and is advantageous in that recording to the thermosensitive recording layer and thermal activation of the heat-sensitive adhesive layer can be simultaneously carried out by heating both surfaces of the heat-sensitive adhesive material with the use of an existing heat-sensitive recording printer.

According to the present invention, it is possible to obtain a heat-sensitive adhesive material which can exhibit superior adhesiveness even under low-temperature environment as well as room temperature environment, which has strong adhesive force to rough-surfaced adherends such as corrugated cardboard, and which is superior in blocking resistance and storage stability, through the use of the heat-sensitive adhesive of the present invention. It is also possible to obtain a heat-sensitive adhesive material for recording, which has strong adhesive force to rough-surfaced adherends such as corrugated cardboard under environment of from low-temperature (0°C) to high-temperature (40°C), which is capable of exhibiting its adhesiveness by means of a thermal head, and which is superior in blocking resistance, by applying a recording layer onto one surface of a support and by applying the heat-sensitive adhesive of the present invention onto the opposite surface of the support.

### EXAMPLES

Hereinafter, the present invention will be further described in detail with reference to Examples and Comparative Examples, however, the present invention is not limited to the disclosed Examples. It should be noted that the units represented by "part", "parts", and "%" hereinbelow are construed on the basis of "mass", namely, as "part by mass", "parts by mass", and "% by mass", unless otherwise noted.

### (Synthesis Example 1)

### - Synthesis of Polymeric emulsifier -

Into a four-necked flask equipped with a nitrogen inlet tube, a thermometer, a reflux condenser, a reflux condenser and an agitator, 25 parts, on the solid content basis, of a polyoxyethylene phenylether-based reactive emulsifier (product name, AQUARON RN-50, produced by Dai-ichi Kogyo Seiyaku Co., Ltd.), 12.5 parts of styrene, 12.5 parts of methyl methacrylate, 40 parts of methacrylic acid and 10 parts of sodium styrenesulfonate were charged, further 20 parts of water were added to prepare a transparent, uniform liquid. Subsequently, to the liquid, 1 part of dodecanethiol, 2 parts of benzoyl peroxide, and 300 parts of water added and mixed therewith to initiate polymerization. A reactant thus obtained was agitated at 65°C for 2 hours, afterward, 29 parts of 28% ammonia water were added to the reactant, and further agitated at 65°C for 6 hours whereupon the polymerization was terminated. Shortly after the polymerization, the reactant was cooled to normal temperature, thereby yielding a polymeric emulsifier dispersion liquid having a nonvolatile content of 22.5% and a mass average molecular weight of 32,000.

### (Synthesis Example 2)

### - Synthesis of Polymeric emulsifier -

Into a four-necked flask equipped with a nitrogen inlet tube, a thermometer, a reflux condenser, a reflux condenser and an agitator, 25 parts, on the solid content basis, of a polyoxyethylene phenylether-based reactive emulsifier (product name, AQUARON RN-50, produced by Dai-ichi Kogyo Seiyaku Co., Ltd.), 12.5 parts of styrene, 12.5 parts of methyl methacrylate, 40 parts of methacrylic acid and 10 parts of sodium styrenesulfonate were charged, further 20 parts of water were added to prepare a transparent, uniform liquid. Subsequently, to the liquid, 1 part of dodecanethiol, 2 parts of benzoyl peroxide, and 300 parts of water added and mixed therewith to initiate polymerization. A reactant thus obtained was agitated at 65°C for 2 hours, afterward, 29 parts of 28% ammonia water were added to the reactant, further agitated at 65°C for 8 hours, 1 part of isopropyl alcohol was further added to the reactant, and then the polymerization was terminated. Shortly after the polymerization, the reactant was cooled to normal temperature, thereby yielding a polymeric emulsifier dispersion liquid having a nonvolatile content of 22.5% and a mass average molecular weight of 43,000.

### (Production Example 1)

### - Production of Emulsion-type Adhesion Imparting Agent [A-1] -

In 60 parts of toluene, 100 parts of a polymerized rosin ester having a softening point of 125°C (adhesion-imparting agent, product name: PENCEL D-125, produced by Arakawa Chemical Industries Ltd.) were dissolved at 100°C for about 1 hour to obtain a solution, and then the solution was cooled to 80°C. Subsequently, 3 parts, on the solid content basis, of the polymeric emulsifier obtained in Synthesis Example 1 and 160 parts of water were added to the solution, and the solution was strongly agitated at 75°C for 1 hour to perform pre-emulsification. Further, a pre-emulsified product thus obtained was emulsified under a high-pressure of 300kg/cm² using a high-energy homogenizer (manufactured by Manton-Gaulin) to thereby obtain an emulsion. Next, 200 parts of the emulsion were poured to a reduced-pressure distillation apparatus, and reduced-pressure distillation was carried out under a condition of 50°C and 100 mmHg for 8 hours, thereby yielding an emulsion-type adhesion-imparting agent [A-1] having a solid content of 50%.

### (Production Example 2)

### - Production of Emulsion-type Adhesion Imparting Agent [A-2] -

An emulsion-type adhesion-imparting agent [A-2] having a solid content of 50% was produced in a similar manner to that described in Production Example 1 except that the polymerized rosin ester having a softening point of 125°C (adhesion-imparting agent, product name: PENCEL D-125, produced by Arakawa Chemical Industries Ltd.) was replaced with a polymerized rosin ester having a softening point of 135°C (adhesion-imparting agent, product name: PENCEL D-135, produced by Arakawa Chemical Industries Ltd.).

### (Production Example 3)

### - Production of Emulsion-type Adhesion Imparting Agent [A-3] -

An emulsion-type adhesion-imparting agent [A-3] having a solid content of 50% was produced in a similar manner to that described in Production Example 1 except that the polymerized rosin ester having a softening point of 125°C (adhesion-imparting agent, product name: PENCEL D-125, produced by Arakawa Chemical Industries Ltd.) was replaced with a polymerized rosin ester having a softening point of 160°C (adhesion-imparting agent, product name: PENCEL D-160, produced by Arakawa Chemical Industries Ltd.).

### (Production Example 4)

### - Production of Emulsion-type Adhesion Imparting Agent [A-4] -

An emulsion-type adhesion-imparting agent [A-4] having a solid content of 50% was produced in a similar manner to that described in Production Example 1 except that the polymerized rosin ester having a softening point of 125°C (adhesion-imparting agent, product name: PENCEL D-125, produced by Arakawa Chemical Industries Ltd.) was replaced with a polymerized rosin ester having a softening point of 165°C (adhesion-imparting agent, product name: PENCEL KK, produced by Arakawa Chemical Industries Ltd.).

### (Production Example 5)

### - Production of Emulsion-type Adhesion Imparting Agent [A-5] -

An emulsion-type adhesion-imparting agent [A-5] having a solid content of 50% was produced in a similar manner to that described in Production Example 1 except that the polymerized rosin ester having a softening point of 125°C (adhesion-imparting agent, product name: PENCEL D-125, produced by Arakawa Chemical Industries Ltd.) was replaced with terpene phenol having a softening point of 150°C (adhesion-imparting agent, product name: TAMANOL 803L, produced by Arakawa Chemical Industries Ltd.).

### (Production Example 6)

### - Production of Emulsion-type Adhesion Imparting Agent [A-6] -

An emulsion-type adhesion-imparting agent [A-6] having a solid content of 50% was produced in a similar manner to that described in Production Example 1 except that the polymerized rosin ester having a softening point of 125°C (adhesion-imparting agent, product name: PENCEL D-125, produced by Arakawa Chemical Industries Ltd.) was replaced with a 9-based petroleum resin having a softening point of 120°C (adhesion-imparting agent, product name: NEOPOLYMER 120, produced by Nippon Oil Corp.)

### (Production Example 7)

### - Production of Emulsion-type Adhesion Imparting Agent [A-7] -

An emulsion-type adhesion-imparting agent [A-7] was produced in a similar manner to that described in Production Example 1 except that the polymeric emulsifier was replaced with a monomeric emulsifier (sodium dodecylbenzene sulfonate, product name: NEOGEN R, produced by Kao Corporation).

### (Production Example 8)

### - Production of Emulsion-type Adhesion Imparting Agent [A-8] -

An emulsion-type adhesion-imparting agent [A-8] was produced in a similar manner to that described in Production Example 3 except that the polymeric emulsifier was replaced with a monomeric emulsifier (sodium dodecylbenzene sulfonate, product name: NEOGEN R, produced by Kao Corporation).

### (Production Example 9)

### - Production of Emulsion-type Adhesion Imparting Agent [A-9] -

An emulsion-type adhesion-imparting agent [A-9] was produced in a similar manner to that described in Production Example 4 except that the polymeric emulsifier was replaced with a monomeric emulsifier (sodium dodecylbenzene sulfonate, product name: NEOGEN R, produced by Kao Corporation).

### (Production Example 10)

### - Production of Emulsion-type Adhesion Imparting Agent [A-10] -

An emulsion-type adhesion-imparting agent [A-10] was produced in a similar manner to that described in Production Example 6 except that the polymeric emulsifier was replaced with a monomeric emulsifier (sodium dodecylbenzene sulfonate, product name: NEOGEN R, produced by Kao Corporation).

### (Production Example 11)

### - Production of Emulsion-type Adhesion Imparting Agent [A-11] -

An emulsion-type adhesion-imparting agent [A-11] was produced in a similar manner to that described in Production Example 5 except that the polymeric emulsifier obtained in Synthesis Example 1 was replaced with a monomeric emulsifier (sodium dodecylbenzene sulfonate, product name: NEOGEN R, produced by Kao Corporation).

### (Production Example 12)

### - Production of Emulsion-type Adhesion Imparting Agent [A-12] -

An emulsion-type adhesion-imparting agent [A-12] was produced in a similar manner to that described in Production Example 1 except that the polymeric emulsifier obtained in Synthesis Example 1 was replaced with the polymeric emulsifier obtained in Synthesis Example 2.

### (Production Examples 13 to 17)

### - Production of Thermoplastic Resin Liquids [B liquids] -

Monomer mixtures ([B-1] to [B-5]) each having a composition shown in Table 1 below were prepared.

Subsequently, a mixture having the following composition was polymerized with stirring at 70°C for 9 hours to yield a copolymer. The pH value of the copolymer was adjusted to 7 to 9 with a sodium hydroxide aqueous solution, then an unreacted monomer etc. was removed through steam distillation, and water was added thereto to adjust nonvolatile content, thereby a copolymer emulsion having a nonvolatile content of 50% was prepared.
- water 170 parts
- emulsifier (ELEMINOL ES-70, produced by Sanyo Chemical Industries, Ltd.) 2.5 parts
- potassium persulfate 0.5 parts
- monomer mixture ([B-1] to [B-5] shown in Table 1) 100 parts

**Table 1**

| Structure of monomer (part by mass) | Production Example 13 | Production Example 14 | Production Example 15 | Production Example 16 | Production Example 17 |
|---|---|---|---|---|---|
| | B-1 | B-2 | B-3 | B-4 | B-5 |
| n-butyl acrylate | | | 67 | | |
| 2-ethylhexyl acrylate | 92 | 88 | 10 | 62 | |
| n-octyl acrylate | | | | | 92 |
| methyl methacrylate | | 8 | 10 | 15 | |
| acrylonitrile | 5 | 2 | 10 | 20 | 5 |
| acrylic acid | 2 | 2 | 2 | 2 | 2 |
| vinyl acetate | 1 | | 1 | 1 | |
| styrene | | | | | 1 |
| Glass transition temperature of copolymer (Tg) | -67°C | -58°C | -33°C | -27°C | -72°C |

### (Production Example 18)

### - Preparation of Thermoplastic Resin Liquid [B-6 liquid] -

A thermoplastic resin emulsion (containing 2-ethylhexyl acrylate resin as a main component, AP5570, produced by Showa High Polymer Co., Ltd.; solid content: 55%; glass transition temperature (Tg): -65°C) was prepared.

### (Production Example 19)

### - Preparation of Solid Plasticizer Dispersion Liquid [C-1] -

A mixture having the following composition was dispersed using a sand mill so as to have a volume average particle diameter of 1.0 µm, and a solid plasticizer dispersion liquid [C-1] was thus prepared.
- triphenylphosphine (product name: TPP, produced by Hokko Chemical Industry Co., Ltd.) 30 parts
- 10% aqueous solution of a copolymer of vinyl alcohol-sodium arylsulfate (product name: GOHSERAN L-3266, produced by Nippon Synthetic Chemical Industry Co., Ltd.; number average molecular weight: 15,000; saponification degree: 88%) 15 parts
- alkyl-aryl sulfonate (surfactant) 0.15 parts
- water 54.85 parts

### (Production Example 20)

### - Preparation of Solid Plasticizer Dispersion Liquid [C-2] -

A mixture having the following composition was dispersed using a sand mill so as to have a volume average particle diameter of 1.0 µm, and a solid plasticizer dispersion liquid [C-2] was thus prepared.
• 2-(2'-hydroxy-3'-t-butyl-5'-methylphenyl)-5-chlorobenzotriazole (product name: EVERSORB 73, produced by Everlight Chemical Industrial Corporation) 30 parts
• 10% aqueous solution of a copolymer of vinyl alcohol-sodium arylsulfate (product name: GOHSERAN L-3266, produced by Nippon Synthetic Chemical Industry Co., Ltd.; number average molecular weight: 15,000; saponification degree: 88%) 15 parts
• alkyl-aryl sulfonate (product name: NEWCOL-290M, produced by Nippon Nyukazai Co., Ltd.) 0.15 parts
• water 54.85 parts

### (Production Example 21)

### - Preparation of Solid Plasticizer Dispersion Liquid [C-3] -

A mixture having the following composition was dispersed using a sand mill so as to have a volume average particle diameter of 1.0 µm, and a solid plasticizer dispersion liquid [C-3] was thus prepared.
• diethyl[[3,5-bis(1,1-dimethylethyl)-4-hydroxyphenyl]phosphonate (product name: PRONOX 1222, produced by Everlight Chemical Industrial Corporation) 30 parts
• 10% aqueous solution of a copolymer of vinyl alcohol-sodium arylsulfate (product name: GOHSERAN L-3266, produced by Nippon Synthetic Chemical Industry Co., Ltd.; number average molecular weight: 15,000; saponification degree: 88%) 15 parts
• alkyl-aryl sulfonate (product name: NEWCOL-290M, produced by Nippon Nyukazai Co., Ltd.) 0.15 parts
• water 54.85 parts

### (Production Example 22)

### - Preparation of Hollow Under Layer Coating Liquid [D-1 Liquid] -

• spherically shaped plastic hollow particles (acrylonitrile/vinylidene chloride/methyl methacrylate copolymer; solid content concentration: 41%, average particle diameter: 3.6 µm, hollow rate: 90%) 14.6 parts
• thermoplastic resin liquid [B-1 Liquid] 24.0 parts
• surfactant (DAPRO W-77, produced by Elementis Japan K.K.) 0.1 parts
• water 60.4 parts

A mixture having the above composition was dispersed with stirring to prepare a hollow under layer coating liquid [D-1 Liquid].

### (Production Example 23)

### - Preparation of Adhesive Under Layer Coating Liquid [D-2 Liquid -

A mixture having the following composition was stirred to prepare an adhesive under layer coating liquid [D-2 Liquid].
• thermoplastic resin liquid [B-1 Liquid] 100 parts
• surfactant (DAPRO W-77, produced by Elementis Japan K.K.) 0.1 parts

### (Example 1)

### - Preparation of Water-Dispersible Heat-Sensitive Adhesive Liquid [E-1 Liquid] -

• emulsion-type adhesion-imparting agent [A-1 Liquid] 8.1 parts
• thermoplastic resin liquid [B-1 Liquid] 8.1 parts
• solid plasticizer dispersion liquid [C-1 Liquid] 49.1 parts
• solid plasticizer dispersion liquid [C-2 Liquid] 32.7 parts
• water 2.0 parts

A mixture having the above composition was stirred to prepare a water-dispersible heat-sensitive adhesive liquid [E-1 Liquid].

### (Example 2)

A water-dispersible heat-sensitive adhesive liquid [E-2 Liquid] was prepared in a similar manner to that described in Example 1 except that the emulsion-type adhesion-imparting agent [A-1 Liquid] was replaced with the emulsion-type adhesion-imparting agent [A-2 Liquid].

### (Example 3)

A water-dispersible heat-sensitive adhesive liquid [E-3 Liquid] was prepared in a similar manner to that described in Example 1 except that the emulsion-type adhesion-imparting agent [A-1 Liquid] was replaced with the emulsion-type adhesion-imparting agent [A-3 Liquid].

### (Example 4)

A water-dispersible heat-sensitive adhesive liquid [E-4 Liquid] was prepared in a similar manner to that described in Example 1 except that the emulsion-type adhesion-imparting agent [A-1 Liquid] was replaced with the emulsion-type adhesion-imparting agent [A-4 Liquid].

### (Example 5)

A water-dispersible heat-sensitive adhesive liquid [E-5 Liquid] was prepared in a similar manner to that described in Example 1 except that the composition of the emulsion-type adhesion-imparting agent was changed to the following composition.
• emulsion-type adhesion-imparting agent [A-3 Liquid] 8.1 parts
• thermoplastic resin liquid [B-1 Liquid] 8.1 parts
• solid plasticizer dispersion liquid [C-3 Liquid] 81.8 parts
• water 2.0 parts

### (Example 6)

A water-dispersible heat-sensitive adhesive liquid [E-6 Liquid] was prepared in a similar manner to that described in Example 1 except that the emulsion-type adhesion-imparting agent [A-1 Liquid] was replaced with the emulsion-type adhesion-imparting agent [A-5 Liquid].

### (Example 7)

A water-dispersible heat-sensitive adhesive liquid [E-7 Liquid] was prepared in a similar manner to that described in Example 1 except that the emulsion-type adhesion-imparting agent [A-1 Liquid] was replaced with the emulsion-type adhesion-imparting agent [A-6 Liquid].

### (Example 8)

A water-dispersible heat-sensitive adhesive liquid [E-8 Liquid] was prepared in a similar manner to that described in Example 1 except that the composition of the emulsion-type adhesion-imparting agent was changed to the following composition.
• emulsion-type adhesion-imparting agent [A-1 Liquid] 8.1 parts
• thermoplastic resin liquid [B-2 Liquid] 8.1 parts
• solid plasticizer dispersion liquid [C-3 Liquid] 49.1 parts
• solid plasticizer dispersion liquid [C-2 Liquid] 32.7 parts
• water 2.0 parts

### (Example 9)

A water-dispersible heat-sensitive adhesive liquid [E-9 Liquid] was prepared in a similar manner to that described in Example 8 except that the thermoplastic resin liquid [B-2 Liquid] was replaced with the thermoplastic resin liquid [B-3 Liquid].

### (Example 10)

A water-dispersible heat-sensitive adhesive liquid [E-10 Liquid] was prepared in a similar manner to that described in Example 8 except that the thermoplastic resin liquid [B-2 Liquid] was replaced with the thermoplastic resin liquid [B-4 Liquid].

### (Example 11)

A water-dispersible heat-sensitive adhesive liquid [E-11 Liquid] was prepared in a similar manner to that described in Example 8 except that the thermoplastic resin liquid [B-2 Liquid] was replaced with the thermoplastic resin liquid [B-5 Liquid].

### (Example 12)

A water-dispersible heat-sensitive adhesive liquid [E-12 Liquid] was prepared in a similar manner to that described in Example 1 except that the emulsion-type adhesion-imparting agent [A-1 Liquid] was replaced with the emulsion-type adhesion-imparting agent [A-12 Liquid].

### (Comparative Example 1)

A water-dispersible heat-sensitive adhesive liquid [E-15 Liquid] was prepared in a similar manner to that described in Example 1 except that the emulsion-type adhesion-imparting agent [A-1 Liquid] was replaced with the emulsion-type adhesion-imparting agent [A-7 Liquid].

### (Comparative Example 2)

A water-dispersible heat-sensitive adhesive liquid [E-16 Liquid] was prepared in a similar manner to that described in Example 1 except that the emulsion-type adhesion-imparting agent [A-1 Liquid] was replaced with the emulsion-type adhesion-imparting agent [A-8 Liquid].

### (Comparative Example 3)

A water-dispersible heat-sensitive adhesive liquid [E-17 Liquid] was prepared in a similar manner to that described in Example 1 except that the emulsion-type adhesion-imparting agent [A-1 Liquid] was replaced with the emulsion-type adhesion-imparting agent [A-9 Liquid].

### (Comparative Example 4)

A water-dispersible heat-sensitive adhesive liquid [E-18 Liquid] was prepared in a similar manner to that described in Example 5 except that the emulsion-type adhesion-imparting agent [A-3 Liquid] was replaced with the emulsion-type adhesion-imparting agent [A-8 Liquid].

### (Comparative Example 5)

A water-dispersible heat-sensitive adhesive liquid [E-19 Liquid] was prepared in a similar manner to that described in Example 1 except that the emulsion-type adhesion-imparting agent [A-1 Liquid] was replaced with the emulsion-type adhesion-imparting agent [A-10 Liquid].

### (Comparative Example 6)

A water-dispersible heat-sensitive adhesive liquid [E-20 Liquid] was prepared in a similar manner to that described in Example 1 except that the emulsion-type adhesion-imparting agent [A-1 Liquid] was replaced with the emulsion-type adhesion-imparting agent [A-11 Liquid].

### (Example 13)

### < Preparation of Heat-Sensitive Recording Paper >

### - Preparation of Non-Foamable Heat-Insulating Layer Forming Coating Liquid [F Liquid] -

A mixture having the following composition was dispersed with stirring to prepare a non-foamable heat-insulating layer forming coating liquid [F Liquid].
• hollow microparticle dispersion (copolymer resin containing vinylidene chloride and acrylonitrile as main components; solid content concentration: 32%, average particle diameter: 3.6 µm, hollow rate: 92%) 30 parts
• styrene-butadiene copolymer latex (glass transition temperature (Tg): 4°C, solid content concentration: 48%, produced by Nippon A&L Inc.) 10 parts
• surfactant (DAPRO W-77, produced by Elementis Japan K.K.) 0.1 parts
• water 60 parts

### - Preparation of Color Former Dispersion Liquid [G Liquid] -

A mixture having the following composition was dispersed using a sand mill so as to have a volume average particle diameter of about 1.5 µm, and a color former dispersion liquid [G Liquid] was thus prepared.
• 3-di-n-butylamino-6-methyl-7-anilinofluoran 20 parts
• polyvinyl alcohol (10% aqueous solution, GOHSERAN L-3266, produced by Nippon Synthetic Chemical Industry Co., Ltd.) 10 parts
• water 70 parts

### - Preparation of Color Developer Dispersion Liquid [H Liquid] -

A mixture having the following composition was dispersed using a sand mill so as to have a volume average particle diameter of about 1.5 µm, and a color developer dispersion liquid [H Liquid] was thus prepared.
• 4-isopropoxy-4'-hydroxydiphenylsulfone 10 parts
• polyvinyl alcohol (10% aqueous solution, GOHSERAN L-3266, produced by Nippon Synthetic Chemical Industry Co., Ltd.) 25 parts
• calcium carbonate (CALSHITEC BRIRIANT-15, produced by Shiroishi Kogyo Co, .Ltd.) 15 parts
• water 50 parts

### - Preparation of Heat-Sensitive Recording Layer Coating Liquid [I Liquid] -

Next, the [G Liquid] and [H Liquid] were mixed with stirring so that the mixture ratio of [G Liquid ]to [H Liquid] was 1:8 on a mass ratio basis, thereby preparing a heat-sensitive recording layer coating liquid [I Liquid].

Subsequently, the [F Liquid] was applied on a surface of a base paper having an average basis weight of 80 g/m² so that the dried mass was 4 g/m², and dried to thereby provide a non-foamable heat insulating layer. Onto the non-foamable heat insulating layer, the [I Liquid] was applied so that the dried mass was 5 g/m², and dried to thereby provide a heat-sensitive recording layer. Next, the coated paper was subjected to a super calender treatment so as to have an Oken smoothness of 2,000 seconds, thereby yielding a paper coated with a heat-sensitive recording layer.

### [Preparation of Protective Layer Coating Liquid]

### - Preparation of Protective Layer Primary Dispersion Liquid -

A mixture having the following composition was pulverized using a vertical sand mill so as to have a volume average particle diameter of 1 µm or less, and a protective layer primary dispersion liquid was thus prepared.
• aluminum hydroxide (H-42M, produced by Showa Denko K.K.) 20 parts
• polyvinyl alcohol (10% aqueous solution, GOHSERAN L-3266, produced by Nippon Synthetic Chemical Industry Co., Ltd.) 20 parts
• water 40 parts

Next, a mixture having the following composition was mixed and dispersed to prepare a protective layer coating liquid.
• protective layer primary dispersion liquid 10 parts
• polyvinyl alcohol (10% aqueous solution, GOHSERAN L-3266, produced by Nippon Synthetic Chemical Industry Co., Ltd.) 20 parts
• epichlorohydrin (12.5 aqueous solution) 5 parts
• 30% dispersion liquid of zinc stearate 2 parts

### - Preparation of Heat-Sensitive Recording Paper -

Next, the protective layer coating liquid was applied onto the paper that had been coated with the heat-sensitive recording layer so that the dry coated amount was 3.0 g/m², and dried. Afterward, the paper was subjected to a super calender treatment so as to have an Oken smoothness of 2,000 seconds, thereby producing a heat-sensitive recording paper.

Onto a surface of the heat-sensitive recording paper opposite to a surface provided with the heat-sensitive recording layer, the water-dispersible heat-sensitive adhesive liquid [E-1 Liquid] was applied so that the dry adhesion amount was 15 g/m², and dried to form a heat-sensitive adhesive layer. A heat-sensitive adhesive material of Example 13 was produced by the above procedure.

### (Example 14)

A heat-sensitive adhesive material of Example 14 was produced in a similar manner to that described in Example 13 except that the water-dispersible heat-sensitive adhesive liquid [E-1 Liquid] was replaced with the water-dispersible heat-sensitive adhesive liquid [E-2 Liquid].

### (Example 15)

A heat-sensitive adhesive material of Example 15 was produced in a similar manner to that described in Example 13 except that the water-dispersible heat-sensitive adhesive liquid [E-1 Liquid] was replaced with the water-dispersible heat-sensitive adhesive liquid [E-3 Liquid].

### (Example 16)

A heat-sensitive adhesive material of Example 16 was produced in a similar manner to that described in Example 13 except that the water-dispersible heat-sensitive adhesive liquid [E-1 Liquid] was replaced with the water-dispersible heat-sensitive adhesive liquid [E-4 Liquid].

### (Example 17)

A heat-sensitive adhesive material of Example 17 was produced in a similar manner to that described in Example 13 except that the water-dispersible heat-sensitive adhesive liquid [E-1 Liquid] was replaced with the water-dispersible heat-sensitive adhesive liquid [E-5 Liquid].

### (Example 18)

A heat-sensitive adhesive material of Example 18 was produced in a similar manner to that described in Example 13 except that the water-dispersible heat-sensitive adhesive liquid [E-1 Liquid] was replaced with the water-dispersible heat-sensitive adhesive liquid [E-6 Liquid].

### (Example 19)

A heat-sensitive adhesive material of Example 19 was produced in a similar manner to that described in Example 13 except that the water-dispersible heat-sensitive adhesive liquid [E-1 Liquid] was replaced with the water-dispersible heat-sensitive adhesive liquid [E-7 Liquid].

### (Example 20)

A heat-sensitive adhesive material of Example 20 was produced in a similar manner to that described in Example 13 except that the water-dispersible heat-sensitive adhesive liquid [E-1 Liquid] was replaced with the water-dispersible heat-sensitive adhesive liquid [E-8 Liquid].

### (Example 21)

A heat-sensitive adhesive material of Example 21 was produced in a similar manner to that described in Example 13 except that the water-dispersible heat-sensitive adhesive liquid [E-1 Liquid] was replaced with the water-dispersible heat-sensitive adhesive liquid [E-9 Liquid].

### (Example 22)

A heat-sensitive adhesive material of Example 22 was produced in a similar manner to that described in Example 13 except that the water-dispersible heat-sensitive adhesive liquid [E-1 Liquid] was replaced with the water-dispersible heat-sensitive adhesive liquid [E-10 Liquid].

### (Example 23)

A heat-sensitive adhesive material of Example 23 was produced in a similar manner to that described in Example 13 except that the water-dispersible heat-sensitive adhesive liquid [E-1 Liquid] was replaced with the water-dispersible heat-sensitive adhesive liquid [E-11 Liquid].

### (Example 24)

A heat-sensitive adhesive material of Example 24 was produced in a similar manner to that described in Example 13 except that the hollow under layer coating liquid [D-1 Liquid] was applied over a surface of a heat-sensitive adhesive recording paper produced in Example 13, on which surface a heat-sensitive recording layer was not provided, so that the adhesion amount was 5 g/m², and dried to form a hollow under layer, and then a heat-sensitive adhesive layer was formed on the dried hollow under layer.

### (Example 25)

A heat-sensitive adhesive material of Example 25 was produced in a similar manner to that described in Example 13 except that the adhesive under layer coating liquid [D-2 Liquid] was applied over a surface of a heat-sensitive adhesive recording paper produced in Example 13, on which surface a heat-sensitive recording layer was not provided, with the adhesion amount was 20 g/m², dried, then the hollow under layer coating liquid [D-1 Liquid] was applied thereonto with the adhesion amount of 2 g/m², and dried to thereby form an adhesive under layer and a hollow under layer over the heat-sensitive adhesive recording paper.

### (Example 26)

A heat-sensitive adhesive material of Example 26 was produced in a similar manner to that described in Example 13 except that the water-dispersible heat-sensitive adhesive liquid [E-1 Liquid] was replaced with the water-dispersible heat-sensitive adhesive liquid [E-12 Liquid].

### (Comparative Example 7)

A heat-sensitive adhesive material of Comparative Example 7 was produced in a similar manner to that described in Example 13 except that the water-dispersible heat-sensitive adhesive liquid [E-1 Liquid] was replaced with the water-dispersible heat-sensitive adhesive liquid [E-15 Liquid].

### (Comparative Example 8)

A heat-sensitive adhesive material of Comparative Example 8 was produced in a similar manner to that described in Example 13 except that the water-dispersible heat-sensitive adhesive liquid [E-1 Liquid] was replaced with the water-dispersible heat-sensitive adhesive liquid [E-16 Liquid].

### (Comparative Example 9)

A heat-sensitive adhesive material of Comparative Example 9 was produced in a similar manner to that described in Example 13 except that the water-dispersible heat-sensitive adhesive liquid [E-1 Liquid] was replaced with the water-dispersible heat-sensitive adhesive liquid [E-17 Liquid].

### (Comparative Example 10)

A heat-sensitive adhesive material of Comparative Example 10 was produced in a similar manner to that described in Example 13 except that the water-dispersible heat-sensitive adhesive liquid [E-1 Liquid] was replaced with the water-dispersible heat-sensitive adhesive liquid [E-18 Liquid].

### (Comparative Example 11)

A heat-sensitive adhesive material of Comparative Example 11 was produced in a similar manner to that described in Example 13 except that the water-dispersible heat-sensitive adhesive liquid [E-1 Liquid] was replaced with the water-dispersible heat-sensitive adhesive liquid [E-19 Liquid].

### (Comparative Example 12)

A heat-sensitive adhesive material of Comparative Example 12 was produced in a similar manner to that described in Example 13 except that the water-dispersible heat-sensitive adhesive liquid [E-1 Liquid] was replaced with the water-dispersible heat-sensitive adhesive liquid [E-20 Liquid].

Here, the identity of the specific components used to produce the foregoing Examples 13 to 26 and Comparative Examples 7 to 12 is recited in the following Tables 2-A and 2-B.

**Table 2-A**

| | Solid plasticizer | Adhesion imparting agent | | | | Thermoplastic resin | | Under layer |
|---|---|---|---|---|---|---|---|---|
| | | Production Example | Emulsifier | Type | Softening point (°C) | Production Example | Tg (°C) | |
| Ex. 13 | TPP/EVERSORB 73 | PX 1(A-1) | polymeric | polymerized rosin ester | 125°C | PX 14 (B-1) | -67°C | Not formed |
| Ex. 14 | TPP/EVERSORB 73 | PX 2 (A-2) | polymeric | polymerized rosin ester | 135°C | PX 14 (B-1) | -67°C | Not formed |
| Ex. 15 | TPP/EVERSORB 73 | PX 3 (A-3) | polymeric | polymerized rosin ester | 160°C | PX 14 (B-1) | -67°C | Not formed |
| Ex. 16 | TPP/EVERSORB 73 | PX 4 (A-4) | polymeric | polymerized rosin ester | 165°C | PX 14 (B-1) | -67°C | Not formed |
| Ex. 17 | PRONOX 1222 | PX 3 (A-3) | polymeric | polymerized rosin ester | 160°C | PX 14 (B-1) | -67°C | Not formed |
| Ex. 18 | TPP/EVERSORB 73 | PX 5 (A-5) | polymeric | terpene phenol | 150°C | PX 14 (B-1) | -67°C | Not formed |
| Ex. 19 | TPP/EVERSORB 73 | PX 6 (A-6) | polymeric | C9-based petroleum | 120°C | PX 14 (B-1) | -67°C | Not formed |
| Ex. 20 | TPP/EVERSORB 73 | PX 1 (A-1) | polymeric | polymerized rosin ester | 125°C | PX 15 (B-2) | -58°C | Not formed |
| Ex. 21 | TPP/EVERSORB 73 | PX 1 (A-1) | polymeric | polymerized rosin ester | 125°C | PX 16 (B-3) | -33°C | Not formed |
| Ex. 22 | TPP/EVERSORB 73 | PX 1 (A-1) | polymeric | polymerized rosin ester | 125°C | PX 17 (B-4) | -27°C | Not formed |
| Ex. 23 | TPP/EVERSORB 73 | PX 1 (A-1) | polymeric | polymerized rosin ester | 125°C | PX 18 (B-5) | -72°C | Not formed |
| Ex. 24 | TPP/EVERSORB 73 | PX 3 (A-3) | polymeric | polymerized rosin ester | 125°C | PX 14 (B-1) | -67°C | Hollow under layer |
| Ex. 25 | TPP/EVERSORB 73 | PX 3 (A-3) | polymeric | polymerized rosin ester | 125°C | PX 14 (B-1) | -67°C | Hollow under layer + Adhesive under layer |
| Ex. 26 | TPP/EVERSORB 73 | PX 12 (A-12) | polymeric | polymerized rosin ester | 125°C | PX 14 (B-1) | -67°C | Not formed |

| | | | | | | | | |
|---|---|---|---|---|---|---|---|---|
| Note that "PX" in Table 2-A denotes Production Example. | | | | | | | | |

**Table 2-B**

| | Solid plasticizer | Adhesion imparting agent | | | | | | Under layer |
|---|---|---|---|---|---|---|---|---|
| | | Production Example | Emulsifier | Type | Softening point (°C) | Production Example | Tg (°C) | |
| Compara.Ex. 7 | TPP/EVERSORB 73 | PX 7 (A-7) | monomeric | polymerized rosin | 125°C | PX 14 (B-1) | -67°C | Not formed |
| Compara.Ex. 8 | TPP/EVERSORB 73 | PX 8 (A-8) | monomeric | polymerized rosin | 160°C | PX 14 (B-1) | -67°C | Not formed |
| Compara.Ex. 9 | TPP/EVERSORB 73 | PX 9 (A-9) | monomeric | polymerized rosin | 165°C | PX 14 (B-1) | -67°C | Not formed |
| Compara.Ex. 10 | PRONOX 1222 | PX 8 (A-8) | monomeric | polymerized rosin | 160°C | PX 14 (B-1) | -67°C | Not formed |
| Compara.Ex. 11 | TPP/EVERSORB 73 | PX 10 (A-10) | polymeric | C9-based petroleum | 120°C | PX 14 (B-1) | -67°C | Not formed |
| Compara.Ex. 12 | TPP/EVERSORB 73 | PX 11 (A-11) | monomeric | terpene phenol | 150°C | PX 14 (B-1) | -67°C | Not formed |

| | | | | | | | | |
|---|---|---|---|---|---|---|---|---|
| Note that "PX" in Table 2-B denotes Production Example. | | | | | | | | |

Each of the obtained heat-sensitive adhesive materials of Examples 13 to 26 and Comparative Examples 7 to 12 was evaluated for their adhesiveness and blocking resistance as follows.

### < Evaluation of Adhesiveness >

Each of the heat-sensitive adhesive materials was cut into a rectangle having a width of 40 mm and a length of 150 mm and then thermally activated using a heat-sensitive printer (TH-PMD, manufactured by Ohkura Electric Co., Ltd.) under the following conditions: energy applied to head: 0.50 mJ/dot; printing speed: 4 ms/line; and pressure applied to platen: 6 kgf/line. Subsequently, each of the thermally activated cut samples was affixed to corrugated cardboards that had been left to stand for 1 day under four temperature conditions of 0°C, 5°C, 22°C and 40°C, substantially along its length, using a rubber roller through the application of pressure of 2 kg, and then stored at corresponding temperature for one day. Afterward, each of the samples was detached from the corrugated cardboards at a peel angle of 180 degrees and a peel rate of 300 mm/min.

On the occasion of the detachment, its adhesive force was measured using a force gauge (MODEL DPS-5, produced by IMADA Co.,), the data was read at 0.1 sec. intervals, and the results were averaged. Table 4 shows the average adhesive force values of the samples. The unit used was N/40 mm.

The heat-sensitive adhesive material samples were evaluated for their adhesive force with four grades according to the following criteria.
A: 10N/40 mm or higher
B: 5N/40 mm or higher
C: 3N/40 mm to lower than 5N/40 mm
D: 3N/40 mm or lower

### < Evaluation of Blocking Resistance >

In each of the obtained heat-sensitive adhesive materials, a heat-sensitive adhesive layer surface was caused to adhere to the opposite surface (i.e., heat-sensitive recording layer) of the heat-sensitive adhesive material, a pressure of 200g/cm² was applied thereon, and then the heat-sensitive adhesive material samples were left to stand for 1 day and for 3 days at 60°C under dry condition. Thereafter, the samples were left to stand at room temperature, and the heat-sensitive adhesive layer surface was detached from the heat-sensitive recording layer surface. Blocking resistance observed on the occasion of the detachment of each of the samples was evaluated according to the criteria shown in Table 3. Table 4 shows the evaluation results. Note that in the present invention, a heat-sensitive adhesive material with a "grade 7" or higher is suitable for practical use.

**Table 3**

| Evaluation | Grade | Feeling of resistance upon detachment | Sound heard upon detachment | Transfer of dot points | Delamination |
|---|---|---|---|---|---|
| A | 10 | Dead weight | | | |
| | 9 | Slightly felt | Not heard | | |
| B | 8 | Felt | Slightly heard | | |
| | 7 | | Heard | | |
| C | 6 | | | Partly found | |
| | 5 | | | 30% to 50% | |
| | 4 | | | 50% to whole surface | |
| D | 3 | | | | Partly found |
| | 2 | | | | 30% to 50% |
| | 1 | | | | 50% to whole surface |

**Table 4**

| | Adhesive force to corrugated cardboard (after stored for 1 day; N/40 mm) | | | | | | | | Blocking resistance | | | |
|---|---|---|---|---|---|---|---|---|---|---|---|---|
| | at 0°C | | at 5°C | | at 22°C | | at 40°C | | Stored at 60°C for 1 day | | Stored at 60°C for 3 days | |
| Ex. 13 | 9.3 | B | 10.9 | A | 11.4 | A | 6.5 | B | 9 | B | 8 | B |
| Ex. 14 | 9.1 | B | 10.8 | A | 12.3 | A | 6.8 | B | 9 | B | 8 | B |
| Ex. 15 | 8.9 | B | 10.5 | A | 12.5 | A | 7.1 | B | 10 | A | 10 | A |
| Ex. 16 | 8.8 | B | 10.3 | A | 13.5 | A | 7.3 | B | 10 | A | 10 | A |
| Ex. 17 | 2.3 | D | 11.8 | A | 12.2 | A | 7.3 | B | 10 | A | 10 | A |
| Ex. 18 | 8.5 | B | 11.9 | A | 12.7 | A | 7.2 | B | 10 | A | 9 | A |
| Ex. 19 | 6.4 | B | 7.3 | B | 9.7 | B | 5.3 | B | 9 | B | 7 | B |
| Ex. 20 | 9.4 | B | 11.8 | B | 11.5 | A | 7.2 | B | 9 | B | 8 | B |
| Ex. 21 | 9.0 | B | 11.7 | B | 11.2 | A | 7.4 | B | 9 | B | 8 | B |
| Ex. 22 | 5.2 | B | 6.3 | B | 9.8 | B | 6.6 | B | 9 | B | 8 | B |
| Ex. 23 | 9.4 | B | 11.5 | A | 8.5 | B | 5.2 | B | 8 | B | 7 | B |
| Ex. 24 | 12.2 | A | 13.3 | A | 19.5 | A | 12.4 | A | 9 | B | 8 | B |
| Ex. 25 | 15.2 | A | 16.6 | A | 27.8 | A | 17.7 | A | 8 | B | 7 | B |
| Ex. 26 | 5.3 | B | 8.9 | A | 11.4 | A | 6.8 | B | 9 | B | 8 | B |
| Compara.Ex. 7 | 9.5 | B | 11.0 | A | 11.2 | A | 6.3 | B | 6 | D | 2 | D |
| Compara.Ex. 8 | 9.2 | B | 10.7 | A | 12.6 | A | 7.0 | B | 7 | D | 3 | D |
| Compara.Ex. 9 | 8.9 | B | 10.6 | A | 13.7 | A | 7.4 | B | 7 | D | 3 | D |
| Compara.Ex. 10 | 2.5 | D | 11.8 | A | 12.2 | A | 7.3 | B | 7 | D | 3 | D |
| Compara.Ex. 11 | 6.2 | B | 7.5 | A | 10.8 | A | 5.3 | B | 6 | D | 2 | D |
| Compara.Ex. 12 | 9.1 | B | 12.0 | A | 13.5 | A | 6.8 | B | 6 | D | 2 | D |

The results shown in Table 4 demonstrate that the heat-sensitive adhesive materials of Examples 13 through 26 were capable of improving their blocking resistance because an adhesion-imparting agent emulsion prepared by emulsifying an adhesion-imparting agent in the presence of a polymeric emulsifier was used.

The results also demonstrate that the heat-sensitive adhesive materials of Examples 13 through 18 in which a polymerized rosin or a terpene phenol resin was used as an adhesion-imparting agent, exhibited higher adhesive force and were more excellent in blocking resistance than those of the heat-sensitive adhesive material of Example 19 in which an adhesion-imparting agent consisting of a C9-based petroleum resin was used.

In comparison with the heat-sensitive adhesive material Example 17, the heat-sensitive adhesive material of Example 15 exhibited superior adhesive force at 0°C because a mixture of triphenylphosphine and benzotriazole compound was used therein.

It was also found that the heat-sensitive adhesive material of Example 13 was slightly poor in adhesive force under high-temperature environment because a thermoplastic resin having a high-glass transition temperature (Tg) was used.

Use of the heat-sensitive adhesive material of Example 23, in which a thermoplastic resin having a low-glass transition temperature (Tg) was used, resulted in slightly poor blocking resistance.

The heat-sensitive adhesive materials of Examples 24 and 25 were capable of significantly improving adhesive force by further providing an under layer.

In contrast, it was revealed that the heat-sensitive adhesive materials of Comparative Examples 7 through 12 were poor in blocking resistance because an adhesion-imparting agent emulsion prepared by emulsifying an adhesion-imparting agent in the presence of a monomeric emulsifier was used.

Since the heat-sensitive adhesive of the present invention has strong adhesive force to rough-surfaced adherends such as corrugated cardboard, causes less reduction in adhesive force with time, is capable of being thermally activated with low-energy by means of a thermal head, and has superior blocking resistance, it can be suitably used as various heat-sensitive adhesive materials.

## Claims

1. A heat-sensitive adhesive comprising:
a thermoplastic resin,
a solid plasticizer, and
an adhesion-imparting agent,
wherein the adhesion-imparting agent is an adhesion-imparting agent emulsion which is prepared by emulsifying in the presence of a polymeric emulsifier.

2. The heat-sensitive adhesive according to claim 1, wherein the adhesion-imparting agent emulsion comprises one of a polymerized rosin and a terpene phenol resin.

3. The heat-sensitive adhesive according to claim 2, wherein the terpene phenol resin in the adhesion-imparting agent emulsion has a softening point of 150°C or higher.

4. The heat-sensitive adhesive according to any one of claims 1 to 3, wherein the polymeric emulsifier has a mass average molecular weight of 5,000 to 40,000.

5. The heat-sensitive adhesive according to any one of claims 1 to 4,
wherein the solid plasticizer is a compound represented by at least any one of formulae (1) to (3) below, 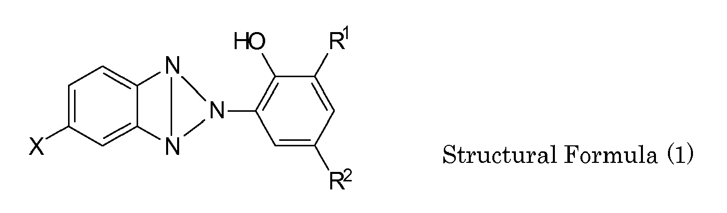 where R¹ and R² may be identical to each other or different from each other, and each represents any one of a hydrogen atom, an alkyl group and an α, α-dimethylbenzyl group; and X represents one of a hydrogen atom and a halogen atom.

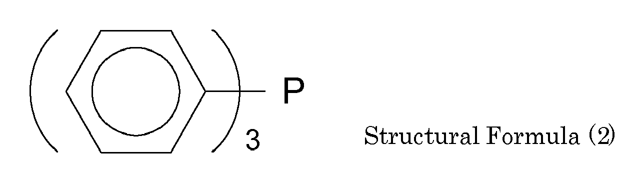

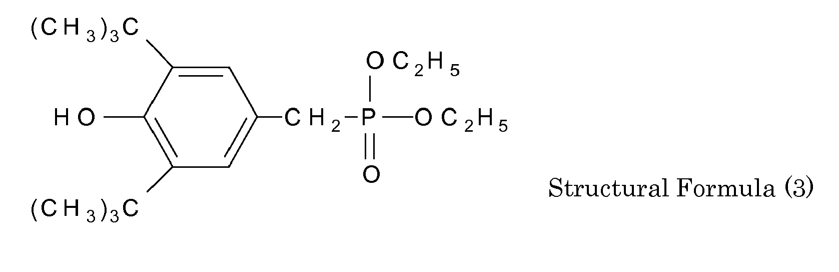

6. The heat-sensitive adhesive according to any one of claims 1 to 5, wherein the thermoplastic resin is a (meth)acrylic resin having a glass transition temperature (Tg) of -70°C to -30°C.

7. A heat-sensitive adhesive material comprising:
a support, and
the heat-sensitive adhesive layer according to any one of claims 1 to 6, provided on the support.

8. The heat-sensitive adhesive material according to claim 7, further comprising an under layer between the heat-sensitive adhesive layer and the support.

9. The heat-sensitive adhesive material according to claim 8, wherein the under layer is a hollow under layer containing hollow particles.

10. The heat-sensitive adhesive material according to claim 8, wherein the under layer comprises an adhesive under layer and a hollow under layer containing hollow particles.

11. The heat-sensitive adhesive material according to any one of claims 7 to 10, exhibiting adhesiveness by being heated through a line-type thermal head.

12. The heat-sensitive adhesive material according to any one of claims 7 to 11, further comprising a recording layer on a surface of the support opposite to a surface on which the heat-sensitive adhesive layer is provided.
